# EUROPEAN PATENT APPLICATION

(11) **EP 3 923 226 A1**
(43) Date of publication of application: **15.12.2021**
(21) Application number: 20752817.5
(22) Date of filing: 05.02.2020
(51) Int. Cl.: G06Q 30/02, G06F 16/00

(54) **PREFERENCE COMPUTATION DEVICE, PREFERENCE COMPUTATION METHOD, AND PROGRAM**

(30) Priority: 05.02.2019 JP 2019019140
(71) Applicant: Sony Group Corporation, Tokyo 108-0075 (JP)
(72) Inventor: KOBAYASHI, Masatoshi, Tokyo 108-0075 (JP); KIMOTO, Hiroshi, Tokyo 108-0075 (JP); AKIMOTO, Kimiko, Tokyo 108-0075 (JP); SUZUKI, Yuki, Tokyo 108-0075 (JP); TAKEDA, Hiroshi, Tokyo 108-0075 (JP); SASAKI, Makoto, Tokyo 108-0075 (JP); BECK, Yasushi, Tokyo 108-0075 (JP); KAWASHIMA, Kensuke, Tokyo 108-0075 (JP); ARIIZUMI, Satoshi, Tokyo 108-0075 (JP); TAKESHITA, Yu, Tokyo 108-0075 (JP); FUJIHARA, Taiji, Tokyo 108-0075 (JP)
(74) Representative: MFG Patentanwälte Meyer-Wildhagen Meggle-Freund Gerhard PartG mbB
(86) International application number: PCT/JP2020/004294
(87) International publication number: WO 2020/162486

(57) **Abstract**

An emotion calculation device (100) includes: an acquisition unit (121) that acquires first content information regarding first content; and a calculation unit (122) that calculates a matching frequency for the first content information for each of segments that classifies users based on emotion types of the users.

## Description

### Field

The present disclosure relates to an emotion calculation device, an emotion calculation method, and a program.

### Background

There is known a technology for utilizing social media data posted on social media for marketing.

For example, Patent Literature 1 discloses a technique for extracting fans who are users who prefer a specific object, such as a product, based on posting on social media.

### Citation List

### Patent Literature

Patent Literature 1: JP 2014-137757 A

### Summary

### Technical Problem

However, the technique described in Patent Literature 1 does not quantitatively calculate an emotional value of the fan for the specific object. Therefore, there is a possibility that it is difficult to determine whether a certain product can appeal to a specific user. For example, users have mutually different emotions. For this reason, the users with different emotions have different emotional senses of values, including emotions and preferences for the same content.

Therefore, the present disclosure proposes an emotion calculation device, an emotion calculation method, and a program for quantitatively calculating a matching frequency of an emotional sense of values according to a user's emotion type for content.

### Solution to Problem

To solve the above problem described above, an emotion calculation device includes: an acquisition unit that acquires first content information regarding first content; and a calculation unit that calculates a matching frequency for the first content information for each of segments that classifies users based on emotion types of the users.

### Brief Description of Drawings

FIG. 1 is a block diagram illustrating an example of a configuration of an emotion calculation device according to an embodiment of the present disclosure.
FIG. 2 is a schematic view illustrating an example of a method of classifying users for each emotion type.
FIG. 3 is a schematic view for describing an example of a method of learning a teacher image.
FIG. 4 is a schematic view for describing an example of a method of learning a teacher text.
FIG. 5 is a schematic diagram for describing an example of a method of estimating a user's emotion type.
FIG. 6A is a schematic view illustrating a change in the emotion type to which a user who purchases a product belongs.
FIG. 6B is a schematic view illustrating a temporal change of word-of-mouth of the user belonging to the emotion type.
FIG. 7 is a schematic view illustrating an example of a user interface.
FIG. 8 is a schematic view illustrating an example of a method of inputting a text.
FIG. 9 is a schematic view illustrating an example of a text analysis result.
FIG. 10 is a schematic view illustrating an example of a method of displaying details of a delivery level.
FIG. 11 is a schematic view illustrating an example of a method of displaying details of a touching level.
FIG. 12A is a schematic view illustrating an example of a method of clustering texts.
FIG. 12B is a schematic view illustrating an example of a nature of a clustered document.
FIG. 13 is a schematic view illustrating an example of a method of inputting an image to an emotion calculation device.
FIG. 14 is a schematic view illustrating an example of an image selection screen.
FIG. 15 is a schematic view illustrating an example of an analysis result of image data.
FIG. 16 is a schematic view illustrating an example of details of a characteristic of a user of an optimal emotion type.
FIG. 17 is a schematic view illustrating an example of a content fan map.
FIG. 18 is a schematic view illustrating an example of the content fan map.
FIG. 19 is a schematic view illustrating an example of a method of inputting content to the emotion calculation device.
FIG. 20 is a schematic view illustrating an example of a search result.
FIG. 21 is a schematic view illustrating an example of an analysis result of an emotion type of a user of content.
FIG. 22 is a schematic view illustrating an example of a user interface of a text analysis screen.
FIG. 23 is a schematic view illustrating an example of a text analysis result.
FIG. 24 is a schematic view illustrating an example of a user interface of a design analysis screen.
FIG. 25 is a schematic view illustrating an example of a design analysis result.
FIG. 26 is a schematic view illustrating an example of a user interface of a user analysis screen.
FIG. 27 is a schematic view illustrating an example of a content analysis result.
FIG. 28 is a schematic view illustrating an example of a process of saving an analysis result.
FIG. 29 is a schematic view for describing an example of a bookmark list.
FIG. 30 is a schematic view illustrating details of a result of analysis performed in the past.
FIG. 31 is a schematic view illustrating a user interface of a shared screen.
FIG. 32 is a diagram illustrating an example of a configuration of a discovery system according to another embodiment of the present disclosure.
FIG. 33 is a block diagram illustrating an example of a configuration of a discovery device according to another embodiment of the present disclosure.
FIG. 34 is a view for describing a method of detecting a face from a frame.
FIG. 35 is a schematic view illustrating an example of a user interface.
FIG. 36 is a view for describing a like list of artist.
FIG. 37 is a schematic view for describing an attention list.
FIG. 38 is a view for describing a screen for displaying an artist's history.
FIG. 39 is a block diagram illustrating a configuration of an analysis device according to still another embodiment of the present disclosure.
FIG. 40 is a schematic view illustrating an example of a user interface.
FIG. 41 is a schematic view illustrating an example of an artist analysis screen.
FIG. 42 is a view for describing a rank of total business power of an artist.
FIG. 43 is a view for describing a rank of trend power of an artist.
FIG. 44 is a view for describing a method of confirming a settled level and a buzzing level.
FIG. 45 is a view for describing information on a settled level of an artist on a day when a buzzing level has soared.
FIG. 46 is a view for describing a method of displaying a persona image.
FIG. 47 is a view for describing a method of changing the persona image to be displayed.
FIG. 48 is a view for describing a method of displaying an information source from which a fan base obtains information.
FIG. 49 is a view for describing a method of displaying an artist preferred by a fan base.
FIG. 50 is a view for describing a method of displaying a playlist preferred by a fan base.
FIG. 51 is a hardware configuration diagram illustrating an example of a computer that realizes a function of the emotion calculation device.

### Description of Embodiments

Hereinafter, embodiments of the present disclosure will be described in detail with reference to the drawings. Note that the same portions are denoted by the same reference signs in each of the following embodiments, and a repetitive description thereof will be omitted.

Further, the present disclosure will be described in the following item order.
1. Embodiment
1-1. Configuration of Emotion Calculation Device
2. User Interface
3. Other Embodiments
3-1. Discovery Device
3-2. User Interface
3-3. Analysis Device
3-4. User Interface
4. Hardware Configuration

### (1. Embodiment)

### [1-1. Configuration of Emotion Calculation Device]

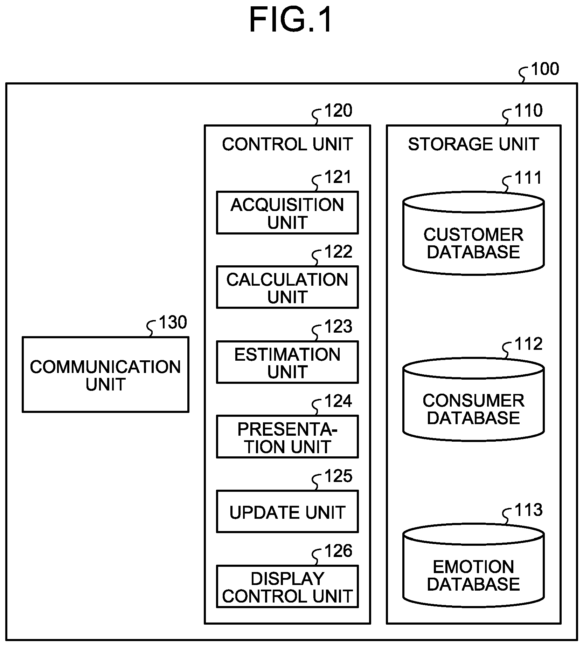

A configuration of an emotion calculation device according to an embodiment of the present disclosure will be described with reference to FIG. 1. FIG. 1 is a block diagram illustrating the configuration of the emotion calculation device.

As illustrated in FIG. 1, an emotion calculation device 100 includes a storage unit 110, a control unit 120, and a communication unit 130. The emotion calculation device 100 is a device capable of determining any emotion type segment to which a user belongs among a plurality of emotion types of segments. The emotion calculation device 100 quantitatively calculates a matching frequency of an emotional sense of values according to a segment of a user's emotion type for content.

The storage unit 110 stores various types of information. The storage unit 110 stores, for example, a program for realizing each unit of the emotion calculation device 100. In this case, the control unit 120 realizes a function of each unit by expanding and executing the program stored in the storage unit 110. The storage unit 110 can be realized by, for example, a semiconductor memory element such as a random access memory (RAM), a read only memory (ROM), and a flash memory, or a storage device such as a hard disk, a solid state drive, and an optical disk. The storage unit 110 may be configured using a plurality of different memories and the like. The storage unit 110 may be an external storage device connected to the emotion calculation device 100 in a wired or wireless manner via the communication unit 130. In this case, the communication unit 130 is connected to, for example, an Internet network (not illustrated). The storage unit 110 has, for example, a customer database 111, a consumer database 112, and an emotion database 113.

The customer database 111 stores results of a questionnaire that has been conducted to classify users into a plurality of segments according to emotion types. For example, the questionnaire is conducted for a plurality of people considering age and gender according to the population distribution in Japan. The consumer database 112 stores Web roaming history of a user, purchase data of a product purchased by the user, and open data provided by a third party.

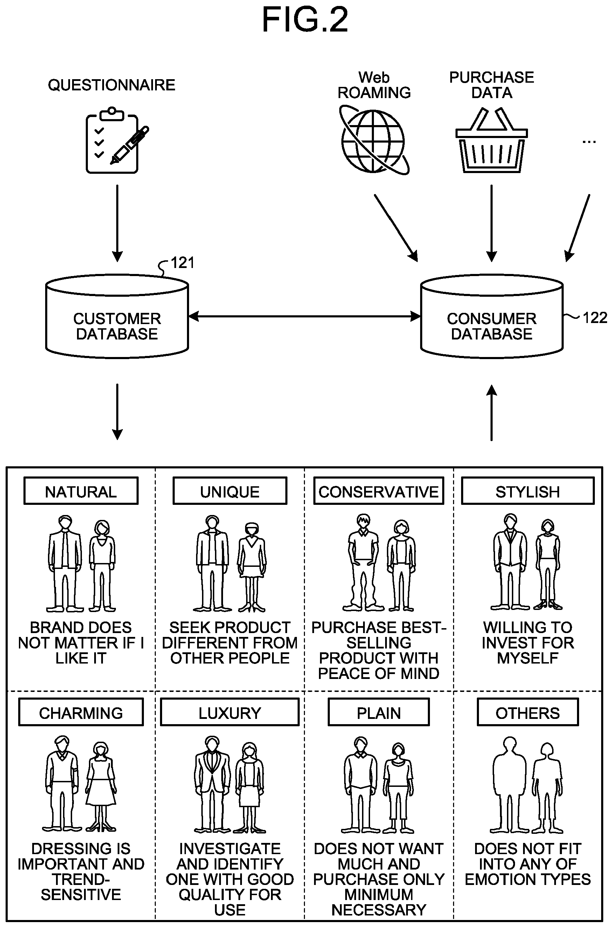

The emotion type segment of the user according to the present embodiment will be described with reference to FIG. 2. FIG. 2 is a schematic view illustrating an example of a method of classifying users into a plurality of segments according to their emotion types.

In the present embodiment, a questionnaire is conducted in advance, and the user's emotion types are classified into about eight to twelve types of segments. In the example illustrated in FIG. 2, the classification is performed into eight types of segments of "natural", "unique", "conservative", "stylish", "charming", "luxury", "plain", and "others", according to the user's emotion type. Note that the types of the user emotion type segments may be less than or more than eight.

"Natural" is, for example, a group of users who have a characteristic of being not particular about a brand if the users like a product. "Unique" is, for example, a group of users who have a characteristic of seeking a product that is different from those of other people. "Conservative" is, for example, a group of users who have a characteristic of purchasing the best-selling product with peace of mind. "Stylish" is, for example, a group of users who have a characteristic of being willing to invest for themselves. "Charming" is, for example, a group of users who have a characteristic of considering dressing as important and are trend-sensitive. "Luxury" is, for example, a group of users who have a characteristic of investigating and identifying one with good quality for use. "Plain" is, for example, a group of users who have a characteristic that the users do not want much and purchase only the minimum necessary. "Others" are a group of users who do not fit into any of the emotion types. Further, in addition to these emotion types, for example, there may be an emotion type called ZEN, which has a characteristic of "spending money on an event" and "not desiring to be swayed by information".

Further, the user's emotion types may be classified into twelve emotion types: "casual", "simple", "plain", "sporty", "cool", "smart", "gorgeous", "sexy", "romantic", "elegant", "formal", and "pop". In this case, "casual" is, for example, a group of users who have a characteristic of selecting a correct one. "Simple" is a group of users who have a characteristic of using what they like for a long time, for example. "Plain" is, for example, a group of users who have a characteristic of having only what is necessary. "Sporty" is a group of users who have a characteristic of being active and preferring casualness. "Cool" is a group of users who have a characteristic of behaving in a balanced manner. "Smart" is a group of users who have a characteristic of thinking and behaving rationally. "Gorgeous" is a group of users who have a characteristic of being brand-oriented and prefer flashy. "Sexy" is a group of users who have a characteristic of refining themselves to approach their ideals. "Romantic" is, for example, a group of users who have a characteristic of being straightforward about their desires. "Elegant" is, for example, a group of users who have a characteristic of preferring what is elegant and placid. "Formal" is, for example, a group of users who have a characteristic of preferring what is formal. "Pop" is, for example, a group of users who have a characteristic of preferring what is gorgeous and fun.

FIG. 1 will be referred to again. The emotion database 113 stores, for example, a characteristic per emotion type. Specifically, the emotion database 113 stores a favorite image, a favorite color, a characteristic of a sentence expression, a personality, a sense of values, and the like for each emotion type. Therefore, the emotion calculation device 100 can calculate an emotion type of a user and determine which segment the user belongs to by acquiring the user's Web roaming history, purchase data of a product purchased by the user, writing on social network service (SNS), and the like.

The control unit 120 includes an acquisition unit 121, a calculation unit 122, an estimation unit 123, a presentation unit 124, an update unit 125, and a display control unit 126. The control unit 120 functions as each unit by expanding and executing a program stored in the storage unit 110. The control unit 120 is realized, for example, by a central processing unit (CPU), a micro processing unit (MPU), or the like by executing a program (for example, a program according to the present invention) stored in a storage unit (not illustrated) with a RAM or the like as a work area. Further, the control unit 120 is a controller, and may be realized by, for example, an integrated circuit such as an application specific integrated circuit (ASIC) and a field programmable gate array (FPGA).

The acquisition unit 121 acquires various types of information. The acquisition unit 121 acquires, for example, results of a questionnaire conducted by a user. In this case, the acquisition unit 121 stores, for example, the acquired results of the questionnaire in the customer database 111. For example, when the questionnaire to the user is conducted regularly (for example, every six months), the acquisition unit 121 acquires questionnaire results regularly. In this case, the acquisition unit 121 regularly stores, for example, the questionnaire results in the customer database 111. That is, the questionnaire results stored in the customer database 111 are regularly updated by the acquisition unit 121.

The acquisition unit 121 acquires, for example, sense-of-values information including the user's Web roaming history and the purchase data of the product purchased by the user via the communication unit 130. In this case, the acquisition unit 121 stores the sense-of-values information in the consumer database 112. For example, the acquisition unit 121 may acquire the sense-of-values information at any time. In this case, the acquisition unit 121 stores the sense-of-values information in the consumer database 112. That is, the sense-of-values information stored in the consumer database 112 is updated at any time by the acquisition unit 121.

The acquisition unit 121 may acquire information on a flow line of a customer, for example. In this case, the acquisition unit 121 may, for example, acquire the Web roaming history as the customer's flow line, or may acquire a page used in a specific Web page as the customer's flow line. In this case, the acquisition unit 121 may, for example, regularly acquire information on the customer's flow line at specific intervals, or may acquire information in real time.

The acquisition unit 121 acquires, for example, content information on content input by a user of the emotion calculation device 100. The acquisition unit 121 may acquire the content information via, for example, the communication unit 130. The content acquired by the acquisition unit 121 is not particularly limited, and examples thereof include a product, a text, a still image, a video, and a sound including a voice and music.

The acquisition unit 121 may acquire review information including word-of-mouth on SNS for the content, a voice of the customer (VOC), and word-of-mouth on an electronic commerce (EC) site.

The calculation unit 122 calculates various types of information. The calculation unit 122 calculates various values based on the information input to the emotion calculation device 100, for example. The calculation unit 122 calculates various types of information based on the content information acquired by the acquisition unit 121, for example. Specifically, the calculation unit 122 calculates a matching frequency of content corresponding to the content information for each emotion type segment based on the content information. A high matching frequency means a high interest in the content, and a low matching frequency means a low interest in the content. In other words, the calculation unit 122 can calculate the content of high interest for each emotion type segment.

The calculation unit 122 calculates the matching frequency based on, for example, a sense-of-values model modeled in advance. In this case, the calculation unit 122 learns a preferred image or text for each emotion type segment in advance, and models the preferred image or text for each emotion type segment.

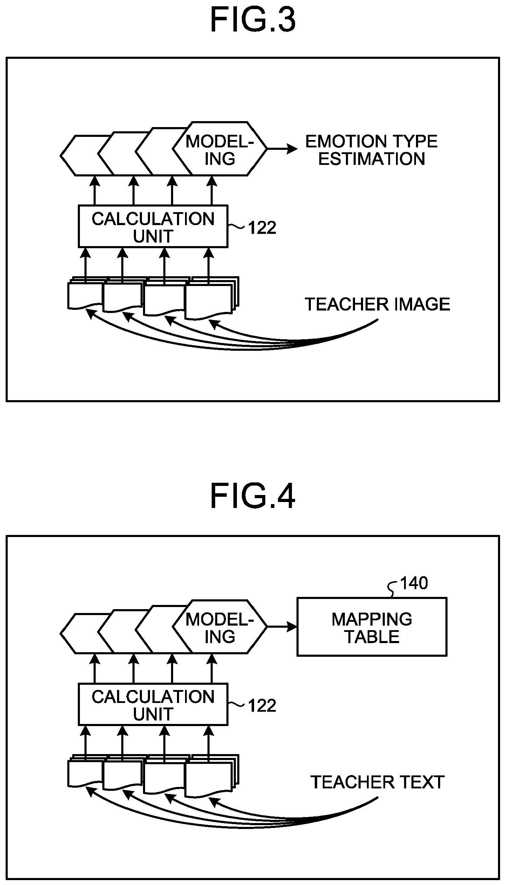

An example of a method of modeling the preferred image and text for each emotion type segment will be described with reference to FIGS. 3 and 4. FIG. 3 is a schematic view illustrating an example of a method by which the calculation unit 122 learns an image. FIG. 4 is a schematic view illustrating an example of a method by which the calculation unit 122 learns a text.

As illustrated in FIG. 3, for example, a plurality of teacher images are input to the calculation unit 122. Specifically, a plurality of preferred teacher images are input to the calculation unit 122 for each emotion type segment. Here, as the teacher image, for example, a plurality of types of images having different concepts such as the emotional sense of values are used for each emotion type segment. As the preferred image for each emotion type segment, for example, it is sufficient to use a result of a questionnaire conducted for a user. The preferred image for each emotion type segment may be, for example, an image acquired by the acquisition unit 121 and stored in the consumer database 112. As the preferred image for each emotion type segment, an image collected by an external organization or the like may be used. The calculation unit 122 models a learning result obtained using the teacher image input for each emotion type segment. As a result, the calculation unit 122 can calculate a matching frequency indicating any emotion type segment to which a user preferring a newly input image belongs based on the model. Note that it is sufficient to apply a well-known image classification function to the calculation unit 122 when making the calculation unit 122 learn an image.

As illustrated in FIG. 4, for example, a plurality of teacher texts are input to the calculation unit 122. Specifically, a plurality of preferred teacher texts are input to the calculation unit 122 for each emotion type segment. Here, as the teacher text, for example, a plurality of types of texts having different concepts such as the emotional sense of values are used for each emotion type segment. As the preferred text for each emotion type segment, for example, it is sufficient to use a result of a questionnaire conducted for a user. The preferred text for each emotion type segment may be, for example, a text acquired by the acquisition unit 121 and stored in the consumer database 112. The calculation unit 122 models a learning result obtained using the teacher text input for each emotion type segment. Specifically, the calculation unit 122 classifies the input teacher texts into, for example, nine keywords. Then, the calculation unit 122 generates, for example, a mapping table 140 in which each of the nine classified keywords indicates a matching degree of any emotion type segment. As a result, the calculation unit 122 can calculate the matching frequency indicating any emotion type segment to which a user preferring a newly input text belongs to by referring to the mapping table 140. Note that a personality of a user and an emotion type are associated with each other in the mapping table 140. Therefore, it is preferable that the nine keywords be close to the characteristics of the respective emotion type segments stored in the emotion database 113 generated in advance. The calculation unit 122 can calculate the matching frequency for each emotion type segment based on the nine keywords.

When content is a text, the calculation unit 122 calculates a delivery level indicating a level of understanding of a user with respect to the text, a touching level indicating a level of the text touching the user's mind, and an expression tendency indicating a communication tendency by an expression method of the user with respect to the text. In this case, the calculation unit 122 performs classification into nine keywords using the touching level as an index at the time of learning by the teacher text. Keywords that indicate the touching levels include "newness", "surprise", "only one", "trend", "story", "No. 1", "customer merit", "selling method", and "real number".

For example, the calculation unit 122 may calculate a matching frequency between emotion types. In other words, the calculation unit 122 may calculate a compatibility level between emotion types. In this case, for example, the acquisition unit 121 acquires emotion types of a plurality of celebrities on SNS and the emotion types of users who are following the celebrities. Then, the calculation unit 122 models a compatibility level between emotion types by, for example, calculating an emotion type having a high proportion of following an emotion type of a celebrity. As a result, it is possible to grasp a combination of emotion types that are easily affected.

The calculation unit 122 may calculate various preferences for each emotion type, for example. The calculation unit 122 may calculate an emotion suggestion for each emotion type. Specifically, the calculation unit 122 may calculate, for example, a method of sorting out preferred direct mail (DM) and Web advertisement for each emotion type. For example, the calculation unit 122 may calculate an optimal combination of content for each emotion type. For example, the calculation unit 122 may calculate preferred media and influencers for each emotion type. The calculation unit 122 may calculate mood board, recommendation information, and the like for each emotion type, for example. For example, the calculation unit 122 may calculate user images and fan bases of various types of content acquired by the acquisition unit 121. In this case, it suffices that the calculation unit 122 calculates a user image and a fan base based on review information acquired by the acquisition unit 121, for example.

Specifically, the calculation unit 122 may calculate an emotion suggestion based on various types of data stored in the consumer database 112, for example. The calculation unit 122 calculates the emotion suggestion based on information on a product list held by a target user, Web browsing history, a Web advertisement that has been clicked, a DM, and the like. For example, the calculation unit 122 may calculate the emotion suggestion by combining information on a target user and information on an image, a character, and the like provided by a third party.

FIG. 1 will be referred to again. The estimation unit 123 estimates various types of information. The estimation unit 123 estimates an emotion type to which a user belongs, for example, based on the sense-of-values information of the user acquired by the acquisition unit 121.

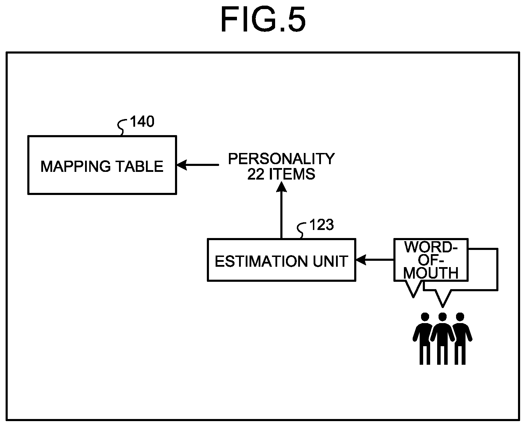

A method by which the estimation unit 123 estimates the user's emotion type will be described with reference to FIG. 5. FIG. 5 is a schematic diagram for describing an example of a method by which the estimation unit 123 estimates the user's emotion type.

As illustrated in FIG. 5, a word-of-mouth and the like issued by a user acquired by the acquisition unit 121 is input to the estimation unit 123. The estimation unit 123 analyzes, for example, whether there is a characteristic of each item regarding 22 items which are characteristics indicating personalities of the user. Then, the estimation unit 123 estimates the user's emotion type using the mapping table 140 in which the personality and the emotion type are associated with each other based on the 22 items that characterize the personalities. Note that examples of the 22 items that characterize the personalities include intellectual curiosity, integrity, and the like. Specifically, it is preferable that the personalities of the 22 items estimated by the estimation unit 123 be close to the characteristics of the respective emotion types stored in the emotion database 113 generated in advance. As a result, the personality of the user having issued the word-of-mouth can be estimated by the acquisition unit 121.

The estimation unit 123 may estimate the user's emotion type based on a text, a still image, a video, a sound including a voice and music, and a combination thereof acquired by the acquisition unit 121. The estimation unit 123 may estimate the user's emotion type based on the customer's flow line of the user acquired by the acquisition unit 121, for example.

FIG. 1 will be referred to again. The presentation unit 124 presents various types of information. The presentation unit 124 presents content to an appropriate user based on a calculation result of the content obtained by the calculation unit 122. Specifically, for example, when the content is a text, the presentation unit 124 presents the text to a user who belongs to an emotion type according to an emotion value of the text based on at least one of the delivery level, the touching level, and the expression tendency.

The presentation unit 124 may present the optimal content that is optimal to the user based on the user's sense-of-values information. Specifically, the acquisition unit 121 acquires at least one piece of second content information regarding second content different from first content generated based on first content information, for example. In this case, the calculation unit 122 calculates a matching frequency for the second content information for each of the plurality of emotion type segments. In this case, the presentation unit 124 presents content having a higher matching frequency of the user between the first content and the second content as the optimal content. Here, the description has been given regarding the case where the presentation unit 124 presents the content having the higher matching frequency between the two pieces of content, but this is an example and does not limit the present disclosure. In the present disclosure, the presentation unit 124 may present the optimal content among a larger number of pieces of content to the user.

The presentation unit 124 may, for example, present an emotion suggestion calculated by the calculation unit 122 by a method according to an emotion type. Specifically, the presentation unit 124 may present a DM and a Web advertisement in a manner according to a preference of the emotion type, for example. The presentation unit 124 may present, for example, a mood board and recommendation information calculated by the calculation unit 122. As a result, the presentation unit 124 can present appropriate recommendation information according to the emotion type.

The update unit 125 detects update timings of various types of information and updates the various types of information. The update unit 125 detects, for example, a timing at which a user updates a classified emotion type. Specifically, the acquisition unit 121 acquires the user's roaming history on the Web at any time. In this case, the acquisition unit 121 can acquire, for example, that the emotion type of the user using a specific site has changed. The update unit 125 detects the time when the acquisition unit 121 acquires a change in the emotion type as the timing for updating the emotion type.

For example, when detecting the timing for updating the emotion type, the update unit 125 may automatically update the emotion type stored in the emotion database 113. The update unit 125 may automatically update the emotion type stored in the emotion database 113 based on, for example, a questionnaire result regularly acquired by the acquisition unit 121, a user's action log acquired by the acquisition unit 121 at any time, and a usage log of a specific site.

The display control unit 126 visualizes and displays matching information capable of comparing matching frequencies for each emotion type segment in a first display area on a display unit. Here, the display unit displays various images. The display unit displays the matching information, for example, according to control from the display control unit 126. The display unit is, for example, a display including a liquid crystal display (LCD) or an organic EL (Organic Electro-Luminescence) display. A specific image displayed on the display unit by the display control unit 126 will be described later.

For example, the display control unit 126 displays an emotion type segment having the highest matching frequency as an optimal emotion type in the first display area adjacent to the matching information. For example, when the emotion type and the optimal emotion type included in the matching information are selected, the display control unit 126 pops up and displays detailed information of the selected emotion type or optimal emotion type. As a result, it is easier to confirm details of a characteristic of the emotion type.

The display control unit 126 displays, for example, the matching frequency of the first content information in the first display area. In this case, the display control unit 126 displays, for example, the matching frequency of the second content information in a second display area adjacent to the first display area. As a result, it is easier to compare the first content information and the second content information.

The display control unit 126 visualizes and displays the delivery level, the touching level, and the expression tendency calculated by the calculation unit 122 on the display unit. In this case, when the delivery level displayed on the display unit is selected by a user of the emotion calculation device 100, the display control unit 126 scores and displays the number of appearances of words and phrases contained in a text and a recognition level. When the touching level displayed on the display unit is selected by the user of the emotion calculation device 100, the display control unit 126 scores and displays each degree at which each of words related to a plurality of predetermined genres is included in a text and appearance frequencies of the words.

When the acquisition unit 121 acquires the sense-of-values information including the purchase information of the user for content for each emotion type in a time-series manner, the display control unit 126 displays a temporal change of the sense-of-values information of the content for each emotion type segment.

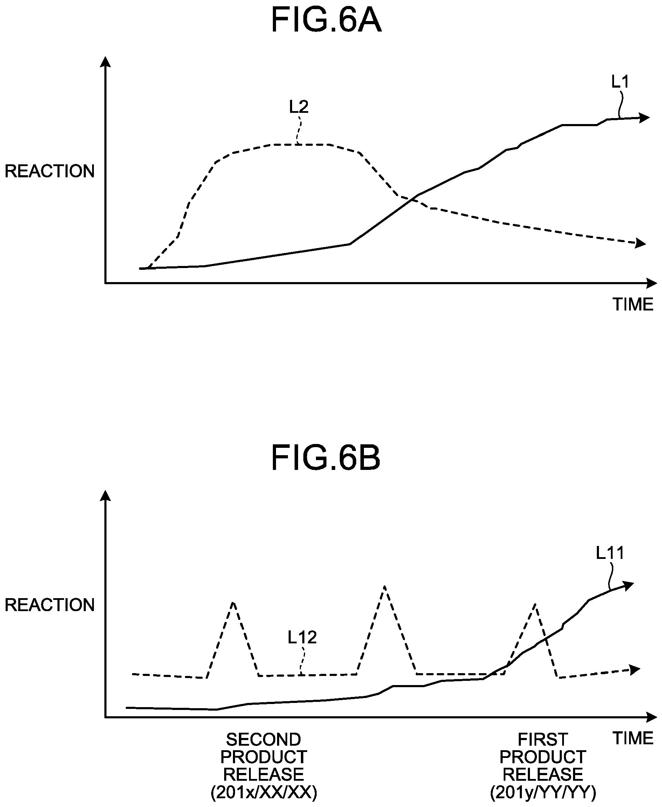

A change in emotion type segment to which a user who purchases a product belongs will be described with reference to FIGS. 6A and 6B. FIG. 6A is a schematic view illustrating the change in the emotion type to which the user who purchases the product belongs. FIG. 6B is a schematic view illustrating a temporal change of word-of-mouth of the user belonging to the emotion type. In FIGS. 6A and 6B, the vertical axis represents a reaction including the number of times of word-of-mouth by users and sales, and the horizontal axis represents time.

In FIG. 6A, Graph L1 indicates, for example, a temporal change of a reaction of a user whose emotion type for a first product related to wireless headphones belongs to "conservative". Graph L2 indicates, for example, a temporal change of a reaction of a user whose emotion type for the first product related to the wireless headphones belongs to "unique". As indicated by Graph L1, the reaction of the conservative type user for the first product increases as time passes. On the other hand, the reaction of the unique type user for the first product decreases as time passes, as indicated by Graph L2. That is, it is possible to grasp that the conservative type user gets more interested in the first product as time passes, and the unique type user gets less interested in the first product as time passes by referring to Graph L1 and Graph L2.

In FIG. 6B, Graph L11 indicates, for example, a temporal change of the reaction of the conservative type user for the wireless headphones. Graph L12 indicates, for example, a temporal change of a reaction of a conservative type user for an air conditioner. As illustrated in Graph L12, the reaction of the conservative type user for the air conditioner increases periodically. This indicates that the reaction is high when the air conditioner is operated, such as in summer and winter. On the other hand, when referring to Graph L11, the reaction of the conservative type user for the wireless headphones is relatively small when a second product related to the wireless headphones has been released on XX/XX/201X. On the other hand, the reaction of the conservative type user for the wireless headphones is relatively large when the first product related to the wireless headphones is released on YY/YY/201Y. That is, it is possible to grasp that the wireless headphones have become a trend for the conservative type people on YY/YY/201Y when the first product is released by referring to Graph L11.

### (2. User Interface)

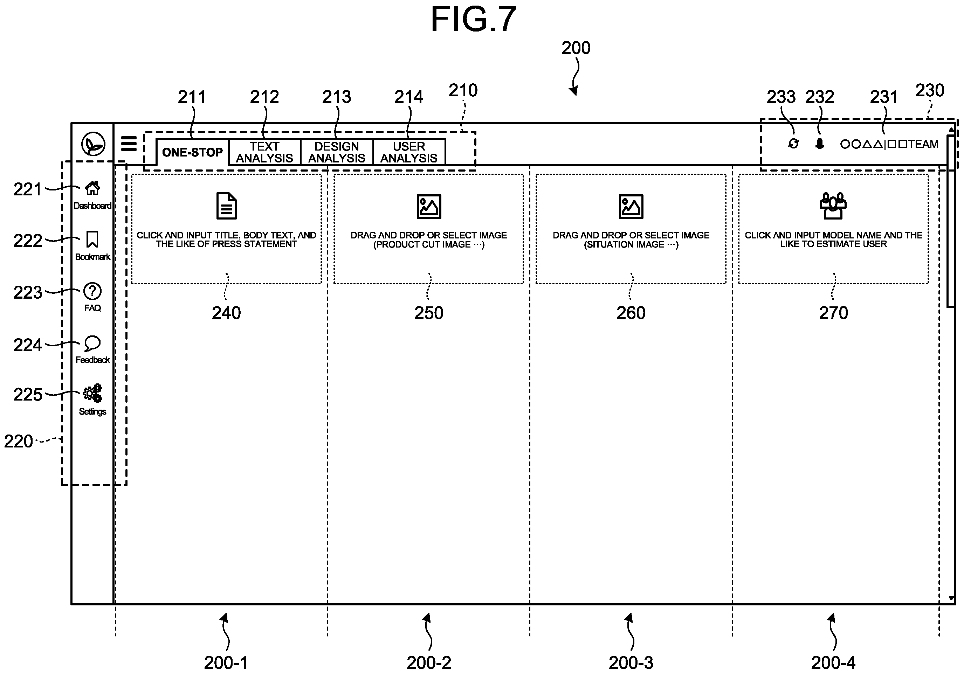

An example of a user interface displayed on the display unit by the emotion calculation device 100 according to the present embodiment will be described with reference to FIG. 7. FIG. 7 is a schematic view illustrating an example of the user interface. A user interface 200 is, for example, an interface displayed on the display unit when a user uses the emotion calculation device 100.

As illustrated in FIG. 7, the user interface 200 illustrates a one-stop screen. The user interface 200 has an analysis selection bar 210, a menu bar 220, a news bar 230, a text input tab 240, a first image input tab 250, a second image input tab 260, and a content input tab 270. The text input tab 240 is arranged in a first area 200-1. The first image input tab 250 is arranged in a second area 200-2. The second image input tab 260 is arranged in a third area 200-3. The content input tab 270 is arranged in a fourth area 200-4. In the emotion calculation device 100, it is possible to execute functions assigned to the respective tabs, for example, by using an operation device such as a mouse to select (click) various tabs displayed on the user interface 200. Note that each of the functions is executed by the control unit 120 of the emotion calculation device 100. A user interface 200 is, for example, an interface displayed on the display unit when a user uses the emotion calculation device 100.

The analysis selection bar 210 has a one-stop tab 211, a text analysis tab 212, a design analysis tab 213, and a user analysis tab 214.

The selection of the one-stop tab 211 makes transition to the one-stop screen. Note that the user interface 200 illustrated in FIG. 7 is the one-stop screen. To select the one-stop tab 211, for example, it is sufficient to operate the mouse or the like to click the one-stop tab 211 displayed on the display unit. This is similarly applied hereinafter, and thus, the description thereof will be omitted.

On the one-stop screen, for example, it is possible to perform analysis of a public statement issued by a company and a catchphrase of a site or the like of the company, analysis of images of a product design and a situation, and analogy of a user who is using content on one screen. On the one-stop screen, for example, a simulation can be executed in advance to confirm whether there is consistency in communication at all touch points with users and whether actual users react as assumed, and can be confirmed afterward.

If the text analysis tab 212 is selected, the user interface 200 transitions to a text analysis screen. On the text analysis screen, it is possible to execute a simulation for appealing power to a user and a matching frequency with the assumed user at the time of examining or creating a public statement, a catchphrase and a body text of a site, a promotional material, an advertisement, and the like. As a result, the user can optimize a sentence on the text analysis screen and select and determine a candidate to be adopted among the plurality of candidates. Further, it is possible to make a comparison with sentences issued by competing companies and media on the text analysis screen. As a result, it becomes easy to brush up the text such as the public statement issued by the own company by using an analysis result on the text analysis screen. Note that the text analysis screen will be described later.

If the design analysis tab 213 is selected, the user interface 200 transitions to a design analysis screen. On the design analysis screen, for example, it is possible to execute a simulation for a matching frequency with an emotion type of an assumed user at the time of creating and examining a product design, a product color variation, an image cut used in a website, a promotional material, and an advertisement of a company, and the like. As a result, on a product design screen, it is possible to optimize and select the product design, the product color variation, and the image cut, and to compare the emotion appealing power and its direction of the product design between the own company and a competitor. As a result, it becomes easy to confirm the consistency between the product design and the image cut by using an analysis result on the design analysis screen. Note that the design analysis screen will be described later.

If the user analysis tab 214 is selected, the user interface 200 transitions to a user analysis screen. On the user analysis screen, it is possible to compare user's emotion types between pieces of content such as products of the own company. On the user analysis screen, for example, regarding the user's emotion type, it is possible to compare an old model and a new model of a product, or compare a product of the own company with a product of another company. As a result, it is possible to grasp a gap between an assumed emotion type and an emotion type actually using the product and grasp proportions of emotion types of users actually using the product, for example, on the user analysis screen. On the user analysis screen, the proportions of emotion types of users who actually use the product may be visualized. As a result, it becomes easy to confirm the validity of a marketing measure and improve a future marketing measure by using an analysis result on the user analysis screen. Note that the user analysis screen will be described later.

The menu bar 220 has a dashboard tab 221, a bookmark tab 222, a frequently asked question (FAQ) tab 223, a feedback tab 224, and a settings tab 225.

The selection of the dashboard tab 221 makes transitions to the user interface 200 illustrating the analysis screen as illustrated in FIG. 7.

If the bookmark tab 222 is selected, for example, the analysis screen being displayed can be saved in the storage unit 110 of the emotion calculation device 100 or an external storage device. Specifically, the input content and analysis result are saved by selecting the bookmark tab 222.

If the bookmark tab 222 is selected, for example, a list of previously saved screens is displayed. Specifically, a past analysis result is displayed, content analyzed in the past is called, or an analysis result of content analyzed by another user is displayed. As a result, it becomes easy to utilize the past analysis result.

If the FAQ tab 223 is selected, for example, a connection is made to a portal site where a manual of the emotion calculation device 100 and FAQ of the emotion calculation device 100 are summarized. As a result, the usability of the emotion calculation device 100 is improved.

If the feedback tab 224 is selected, for example, it is possible to input a user's opinion on the emotion calculation device 100.

If the settings tab 225 is selected, for example, it is possible to edit a project name related to a project and a member belonging to the project.

The news bar 230 has a project tab 231, a news tab 232, and a reset button 233.

A name of a user currently in use and a name of a project in use are displayed on the project tab 231. For example, the project to be used can be changed by selecting the project tab 231.

It is possible to confirm information on update of the emotion calculation device 100, failure information, and the like by selecting the news tab 232. The news tab 232 may display an icon indicating an arrival of new news related to the emotion calculation device 100. As a result, it becomes easy for a user to grasp the latest news.

For example, a process being analyzed can be ended by selecting the reset button 233.

Next, a method of analyzing a text in the emotion calculation device 100 will be described.

A text that needs to be analyzed can be input to the emotion calculation device 100 by selecting the text input tab 240.

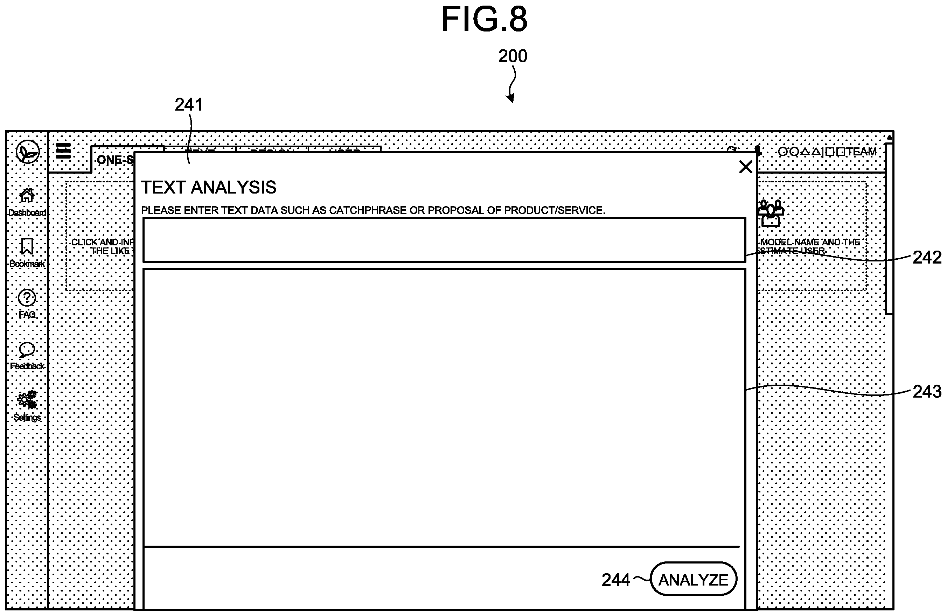

A method of inputting a text to the emotion calculation device 100 will be described with reference to FIG. 8. FIG. 8 is a schematic view illustrating an example of the method of inputting the text to the emotion calculation device 100.

As illustrated in FIG. 8, if the text input tab 240 is selected, for example, the display control unit 126 pops up and displays a text input screen 241 in the user interface 200. On the text input screen 241, for example, "please enter text data such as a catchphrase or a proposal of a product/service" is displayed. Various texts may be input to the text input screen 241 without being limited to the catchphrase or proposal. The text input screen 241 includes a title input area 242 and a body text input area 243.

A title is input in the title input area 242. Specifically, for example, a sentence such as "the world's first..., three models of wireless headphones have been released" is input in the title input area 242.

A body text is input in the body text input area 243. Specifically, for example, a document such as "Company A..., three models of wireless headphones have been released" is input in the body text input area 243. Note that the document input in the title input area 242 and the body text input area 243 is acquired by the acquisition unit 121.

After inputting a sentence in at least one of the title input area 242 and the body text input area 243, the calculation unit 122 calculates the appealing power of the input document by selecting an analysis button 244.

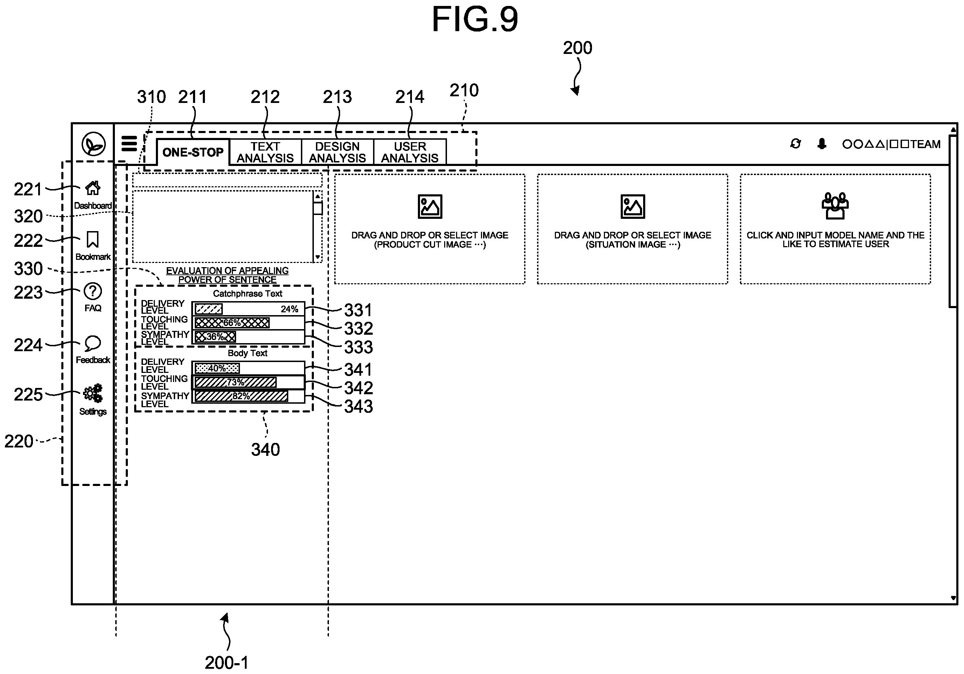

A text analysis result will be described with reference to FIG. 9. FIG. 9 is a schematic view illustrating an example of the text analysis result.

As illustrated in FIG. 9, a title 310, a body text 320, title appealing power 330, and body text appealing power 340 are illustrated in the first area 200-1 of the user interface 200.

The title 310 is a text input in the title input area 242. The body text 320 is a text input in the body text input area 243.

The title appealing power 330 is the appealing power of a title calculated by the calculation unit 122 based on the title acquired by the acquisition unit 121. The calculation unit 122 calculates a delivery level 331, a touching level 332, and an expression tendency 333 as the appealing power of the title. The delivery level 331 is 24%. The touching level 332 is 66%. The expression tendency 333 is 36%. In FIG. 9, the display control unit 126 displays the delivery level 331, the touching level 332, and the expression tendency 333 as graphs. It is possible to grasp that the delivery level of the title is relatively low by referring to the title appealing power 330.

The body text appealing power 340 is the appealing power of a body text calculated by the calculation unit 122 based on the body text acquired by the acquisition unit 121. The calculation unit 122 calculates a delivery level 341, a touching level 342, and an expression tendency 343 as the appealing power of the body text. The delivery level 341 is 40%. The touching level 342 is 73%. The expression tendency 343 is 82%. In FIG. 9, the display control unit 126 displays the delivery level 341, the touching level 342, and the expression tendency 343 as graphs. It is possible to grasp that the touching level and the expression tendency of the body text are relatively high by referring to the body text appealing power 340.

The display control unit 126 can display details of the calculation results of the delivery level 341 and the touching level 342 obtained by the calculation unit 122 by selecting the delivery level 341 and the touching level 342 in the appealing power of the body text. Note that details of the delivery level 331 and the touching level 332 may be displayed by selecting the delivery level 331 and the touching level 332.

The calculation unit 122 scores whether a consumer can understand a document by analyzing an appearance frequency and a recognition level of a word or a phrase contained in the document. The calculation unit 122 obtains scores in five stages based on analysis regarding the number of times for the appearance frequency and a Web search result, a search trend, an access frequency to a dictionary on the Web, and the like for the recognition level. In this case, the display control unit 126 displays, for example, a word or phrase with a low recognition level in red.

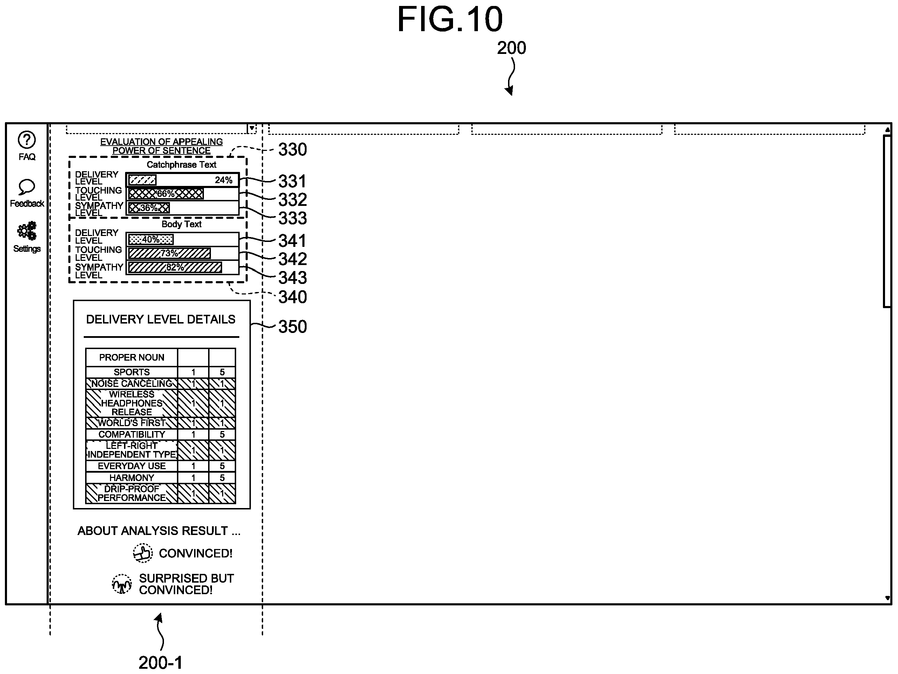

A method of displaying details of the delivery level will be described with reference to FIG. 10. FIG. 10 is a schematic view illustrating an example of the method of displaying the details of the delivery level.

As illustrated in FIG. 10, delivery level details 350 are displayed adjacent to the body text appealing power 340 in the first area 200-1. The delivery level details 350 include, for example, sports, noise canceling, world's first, compatibility, a left-right independent type, everyday use, harmony, and drip-proof performance.

Each appearance frequency of the sports, the noise canceling, the world's first, compatibility, the left-right independent type, the everyday use, the harmony, and the drip-proof performance is 1. This means that each word is included at the same level.

Each recognition level of the sports, the compatibility, the everyday use, and the harmony is 5. On the other hand, each recognition level of the noise canceling, the world's first, the left-right independent type, and the drip-proof performance is 1. In this case, the display control unit 126 displays the noise canceling, the world's first, the left-right independent type, and the drip-proof performance in red. As a result, it becomes easy to grasp a word or phrase with a low recognition level. Further, it becomes easy to rewrite a text with a word or phrase that can be easily delivered based on the delivery level details 350.

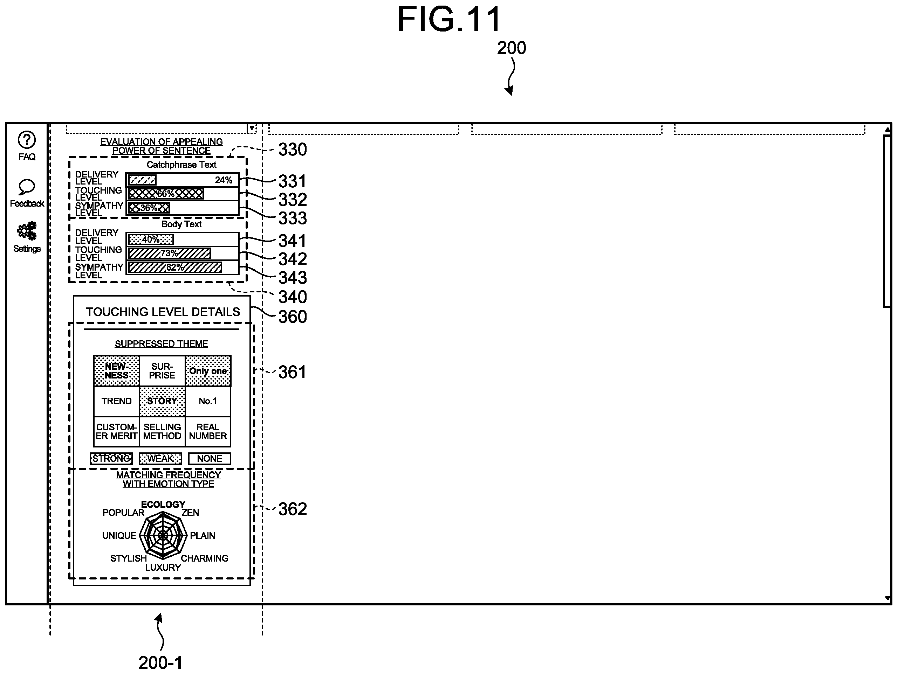

A method of displaying details of the touching level will be described with reference to FIG. 11. FIG. 11 is a schematic view illustrating an example of the method of displaying the details of the touching level.

As illustrated in FIG. 11, touching level details 360 are displayed adjacent to the body text appealing power 340 in the first area 200-1. The touching level details 360 include a theme 361 and a radar chart 362.

The theme 361 indicates each degree of nine keywords indicating the touching level. As described above, the nine keywords are "newness", "surprise", "only one", "trend", "story", "No. 1", "customer merit", "selling method", and "real number". The calculation unit 122 analyzes whether a text contains a word related to each keyword, and comprehensively analyzes an appearance frequency of the word and whether the word is emphasized and used, and scores each keyword. Then, the display control unit 126 highlights a keyword touching a user among the nine keywords. For example, a keyword that has strong influence is displayed in blue, a keyword that has weak influence is displayed in yellow, and a keyword that has no influence is displayed without emphasis. The theme 361 indicates that "newness," "only one," and "story" have weak influence.

The calculation unit 122 analyzes and scores a matching frequency of each keyword for each emotion type segment. The display control unit 126 displays, for example, a calculation result of the calculation unit 122 as the radar chart 362. The radar chart 362 indicates that an ecology user is strongly touched by an emotion type.

It is possible to modify a text while confirming whether a user of an assumed emotion type is touched by the text by referring to the theme 361 and the radar chart 362.

Further, the emotion calculation device 100 may suggest a matching degree indicating whether an input text matches a media or a medium to which the text is published or optimization.

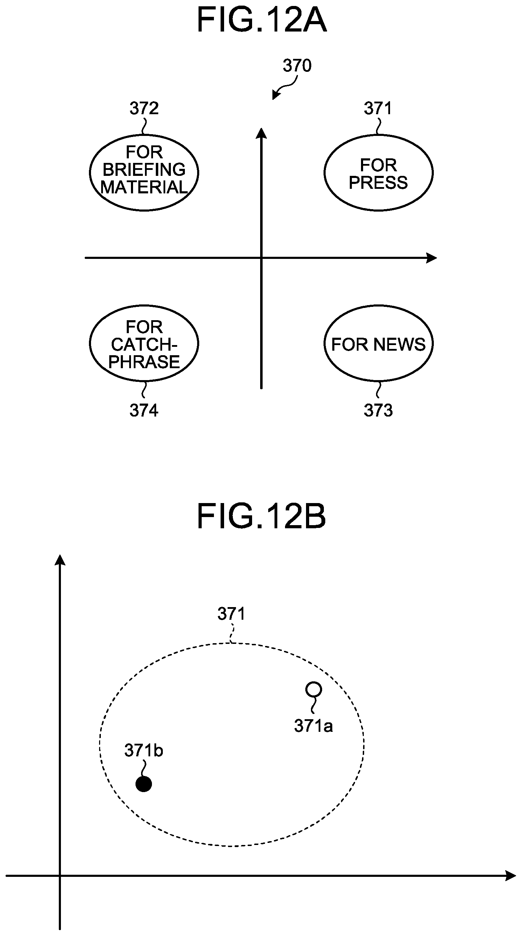

A method of suggesting the matching degree or optimization of the text will be described with reference to FIGS. 12A and 12B.

FIG. 12A is a schematic view illustrating an example of a method of clustering texts. FIG. 12B is a schematic view illustrating an example of a nature of a clustered document.

Graph 370 illustrated in FIG. 12A indicates clustering of an input text into any of a text 371 for a press, a text 372 for a briefing material, and a text 373 for news, and a text 374 for a catchphrase. In this case, the calculation unit 122 analyzes which cluster the input text belongs to. In this case, the display control unit 126 displays an analysis result obtained by the calculation unit 122. As a result, it is possible to suggest which cluster the input text belongs to and whether the input text deviates from the assumed cluster.

FIG. 12B is a schematic view for describing the nature of the document in the text 371 for the press. In FIG. 12B, a first press 371a is a text published by Company A. It is assumed that the first press 371a is, for example, the text that contains a revised expression and is written in a summary manner. A second press 371b is a text released by Company B. It is assumed that the second press 371b is, for example, the text that contains a simple expression and is written in an abstract manner. In this manner, the calculation unit 122 can analyze a nature of a sentence in the clustered text. Specifically, the calculation unit 122 can analyze an expression of the document, a way of writing of the document, a rhythm of the document, and the like from the nature of the document. For this reason, for example, if Company A publishes a text similar to that of Company B, it becomes easy for Company A to appropriately modify the document based on the suggested analysis result.

Next, a method of analyzing a design in the emotion calculation device 100 will be described.

In FIG. 7, it is possible to input an image of a design that needs to be analyzed to the emotion calculation device 100 by selecting the first image input tab 250 and the second image input tab 260.

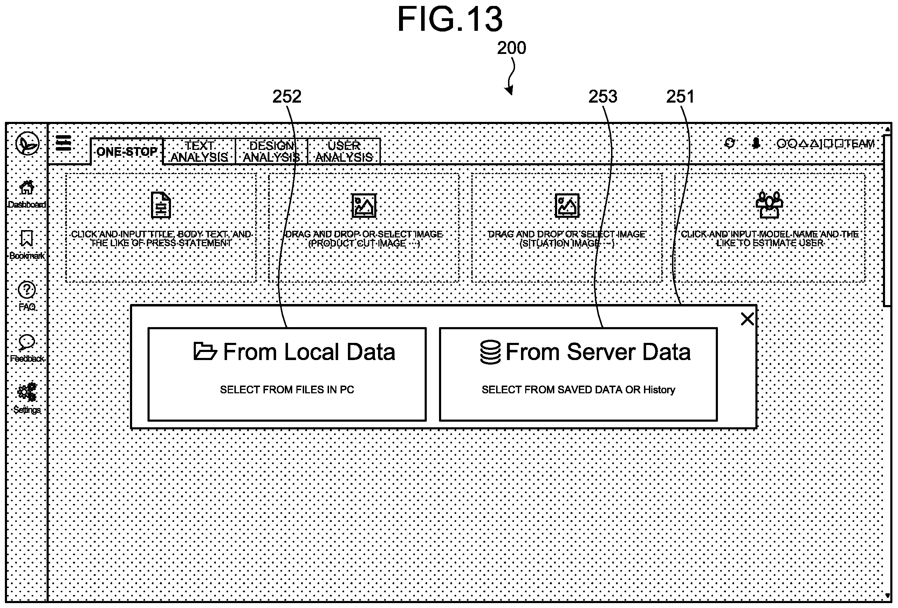

A method of inputting an image to the emotion calculation device 100 will be described with reference to FIG. 13. FIG. 13 is a schematic view illustrating an example of the method of inputting the image to the emotion calculation device 100. A case where the first image input tab 250 is selected will be described in FIG. 13. A process in a case where the second image input tab 260 is selected is similar to a process in the case where the first image input tab 250 is selected, so and thus, the description thereof will be omitted.

As illustrated in FIG. 13, the display control unit 126 pops up and displays an image input screen 251 in the user interface 200, for example, if the first image input tab 250 is selected. The image input screen 251 illustrates a local data input tab 252 and a server data input tab 253.

If the local data input tab 252 is selected, image data stored in a local personal computer (PC) using the emotion calculation device 100 can be input. The server data input tab 253 can input image data stored in a server database. The input image data is acquired by the acquisition unit 121.

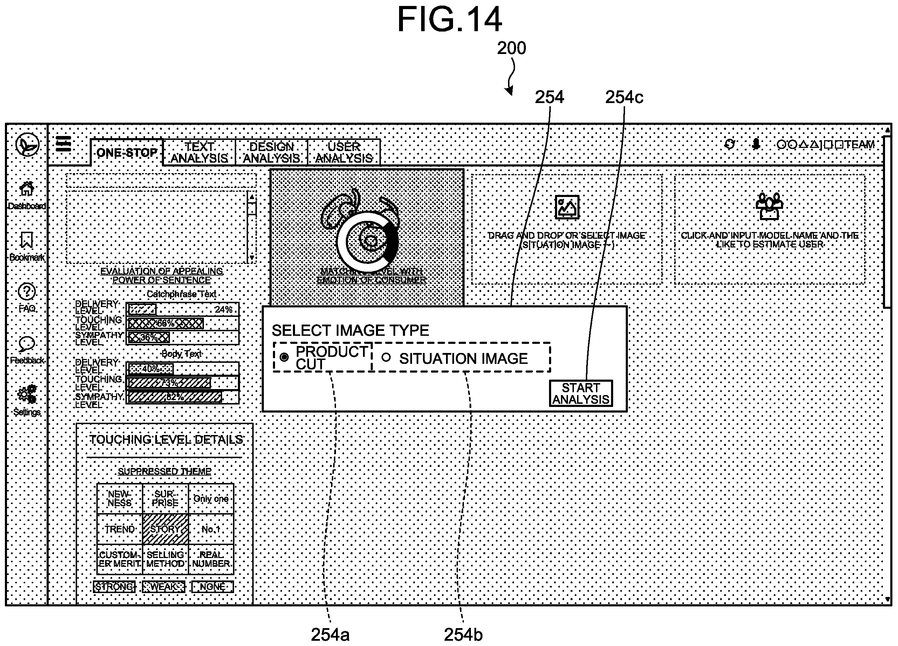

The display control unit 126 displays an image selection screen if the local data input tab 252 or the server data input tab 253 is selected and the input image is selected. FIG. 14 is a schematic view illustrating an example of the image selection screen.

As illustrated in FIG. 14, the display control unit 126 pops up and displays an image selection screen 254. The image selection screen 254 includes a product cut selection button 254a and a situation image selection button 254b. On the image selection screen 254, the product cut selection button 254a is selected when the input image data is a product, and the situation image selection button 254b is selected when the input image data is a situation. The analysis of the product of the calculation unit 122 is executed by selecting an analysis start button 254c after selecting the product cut selection button 254a or the situation image selection button 254b. Specifically, the calculation unit 122 calculates a matching frequency of each emotion type segment with respect to the input image data.

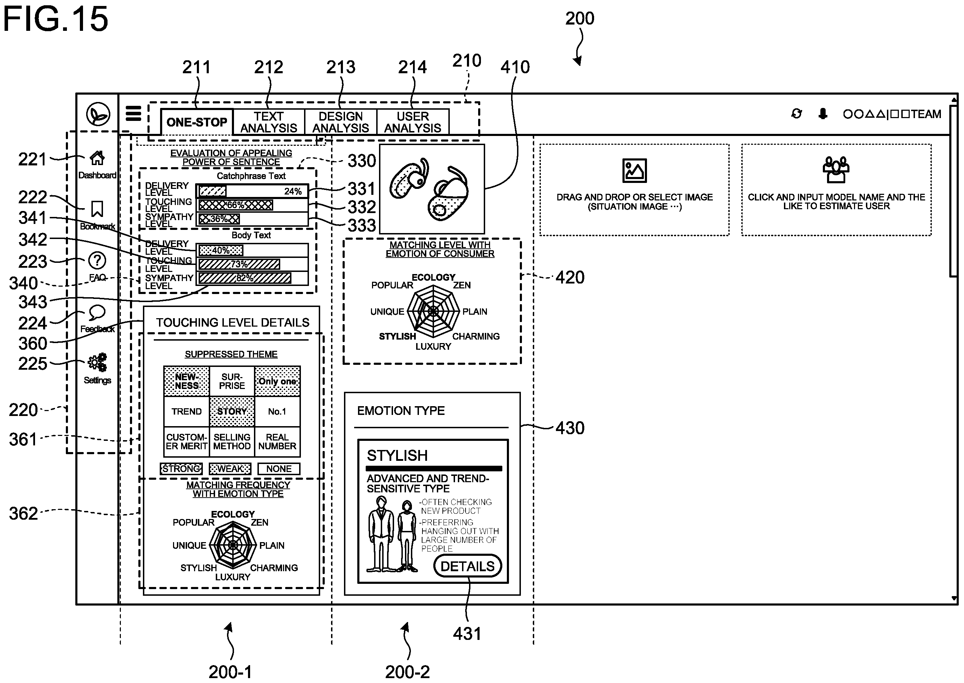

An analysis result of image data will be described with reference to FIG. 15. FIG. 15 is a schematic view illustrating an example of the analysis result of the image data.

As illustrated in FIG. 15, product image data 410, matching information 420, and an optimal emotion type 430 are illustrated in the second area 200-2 of the user interface 200.

The product image data 410 indicates image data used for analysis.

The matching information 420 is displayed adjacent to the product image data 410. The matching information 420 indicates a matching frequency of each emotion type segment with respect to the product image data 410. The display control unit 126 illustrates the matching frequency of each emotion type in a radar chart. As a result, it is possible to grasp whether a product corresponding to the product image data 410 matches an assumed emotion type segment. The matching information 420 indicates that the emotion type segment has a high matching frequency with stylish users. Further, it is also possible to make a comparison with another product image data based on the product image data 410 as will be described in detail later.

The optimal emotion type 430 is displayed adjacent to the matching information 420. The optimal emotion type 430 is an emotion type with the highest matching frequency. Here, "stylish" is illustrated as the optimal emotion type. It is illustrated that the stylish users correspond to an "advanced and trend-sensitive type." "Often checking new products" and "preferring hanging out with a large number of people" are illustrated as characteristics of the stylish users. Further, the optimal emotion type 430 includes a details button 431. It is possible to confirm the characteristics of the user whose emotion type is "stylish" by selecting the details button 431.

Although the product image has been described as an example of content of a still image in the above description, this is merely illustrative and does not limit the present invention. The image input to the emotion calculation device 100 is not particularly limited, and may be a virtual reality (VR) image or an image created by computer aided design (CAD). A video or a still image created by computer graphics (CG) may be input to the emotion calculation device 100.

Further, the content input to the emotion calculation device 100 may be a combination of a product, a text, a still image, a video, and a sound including a voice and music. It is possible to analyze an emotion value from various angles by combining pieces of the content.

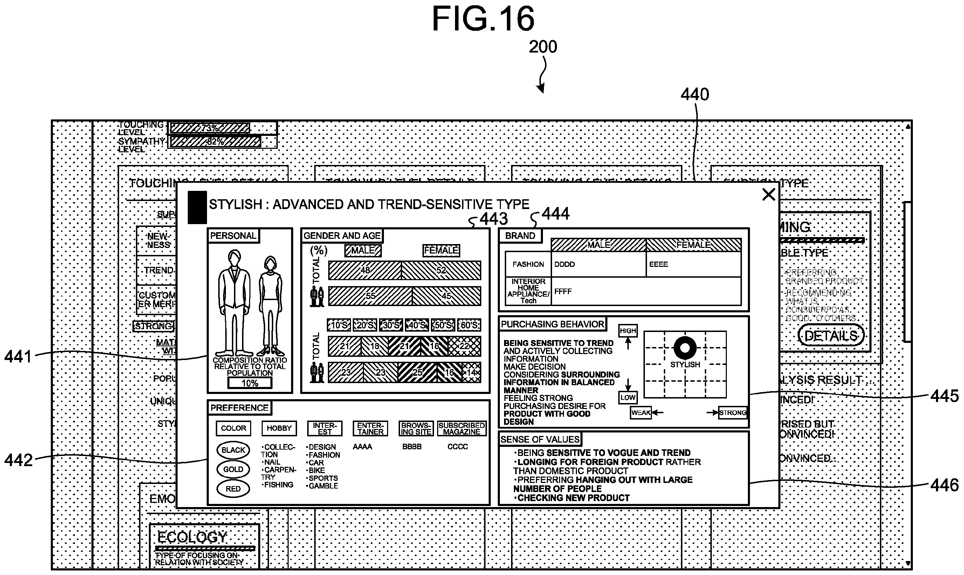

A method of confirming details of a characteristic of a user of an optimal emotion type will be described with reference to FIG. 16. FIG. 16 is a schematic view illustrating an example of the details of the characteristic of the user of the optimal emotion type.

As illustrated in FIG. 16, the display control unit 126 pops up and displays detailed information 440 when the details button 431 is selected.

The detailed information 440 contains personal information 441, preference information 442, gender and age information 443, brand information 444, purchasing behavior information 445, and sense-of-values information 446.

For example, a composition ratio to the total population is illustrated in the personal information 441. In the example illustrated in FIG. 16, a composition ratio of the emotion type of "stylish" is 10%.

The preference information 442 contains information on various tastes of stylish users. The preference information 442 contains, for example, information on colors, hobbies, interests, entertainers, browsing sites, and subscribed magazines. In this case, for example, it is illustrated that the colors preferred by the stylish users are black, gold, and red.

The gender and age information 443 contains information on genders and ages that make up the stylish users. The gender and age information 443 illustrates that, for example, overall 48% are male and 52% are female.

The brand information 444 contains information on brands preferred by the stylish users. The brand information 444 contains, for example, brand information on men and women and their favorite fashions, interiors, and home appliances. The brand information 444 may contain information on a favorite brand for each age group.

The purchasing behavior information 445 contains information on behavior when purchasing a product. For example, the information on behavior when purchasing the product is characterized by a graph generated with a level of influence from the outside on the horizontal axis and an information collection level on the vertical axis. The purchasing behavior information 445 illustrates that, for example, the users are sensitive to trends and actively collects information.

The sense-of-values information 446 contains information on various senses of values of the stylish users. The sense-of-values information 446 illustrates that, for example, the users are sensitive to a vogue and a trend.

As illustrated in FIG. 16, the detailed information 440 contains various types of information on the stylish users. As a result, it is effective when considering a marketing measure such as advertisement, an exhibition, and media selection for developing a product. Note that detailed information of each emotion type may be displayed by selecting the emotion type included in the radar chart of the matching information 420 illustrated in FIG. 15.

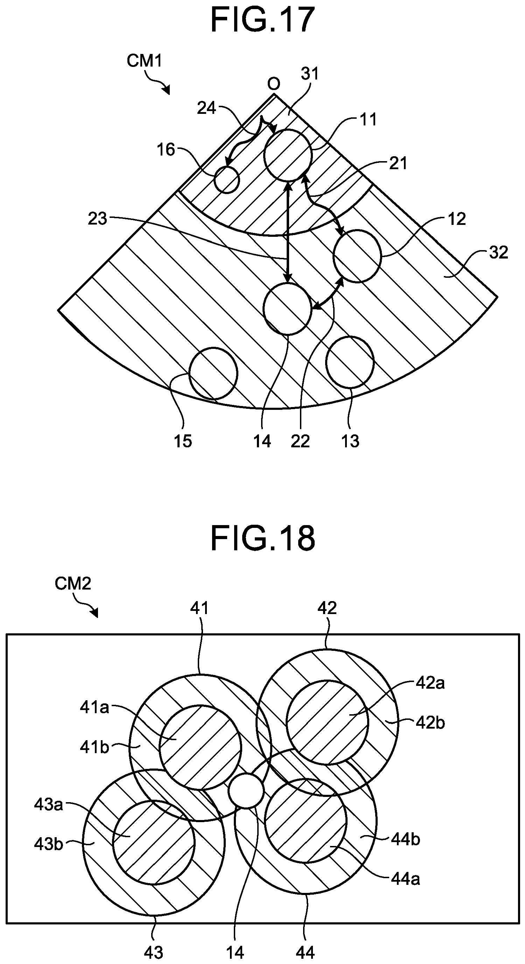

Further, a map, displayed to be linked with content preferred by a specific emotion type A, may be displayed as illustrated in FIG. 17. FIG. 17 is a content fan map that is a network diagram of the content preferred by a user of a specific emotion type.

Content 11, content 12, content 13, content 14, and content 15 are arranged in a content fan map CM1. The content 11 to the content 16 are content preferred by the user of the specific emotion type A. Such a content fan map CM1 can be generated based on the above-described questionnaire results.

The content 11 and the content 16 are arranged in a first area 31. The content 12, the content 13, the content 14, and the content 15 are arranged in a second area 32. In this case, it means that the content arranged in the first area 31 is the content preferred by the user of the emotion type A rather than the content arranged in the second area 32. More specifically, it means that the content arranged closer to the origin O is the content more preferred by the user of emotion type A.

The content 11 and the content 12 are linked by an arrow 21. The content 12 and the content 14 are linked by an arrow 22. The content 11 and the content 14 are linked by an arrow 23. The content 11 and the content 16 are linked by an arrow 24. The linked pieces of content mean, for example, pieces of content purchased together from an EC site or a recommendation site. That is, it means that the linked pieces of content are strongly related to each other. Therefore, it is easy to grasp the content preferred by a customer of a specific emotion type and the relationship between pieces of content by confirming the content fan map CM1.

Further, a map, which illustrates any emotion type preferring specific content, may be displayed as illustrated in FIG. 18. FIG. 18 is a content fan map illustrating which emotion type that prefers a specific content.

A first area 41, a second area 42, a third area 43, and a fourth area 44 are illustrated in a content fan map CM2. For example, content 14 is arranged in the content fan map CM2.

The first area 41 has a central area 41a and a peripheral area 41b. The first area 41 indicates an area of content preferred by a specific emotion type A. In this case, it means that content arranged in the central area 41a is the content preferred by the user of the emotion type A rather than content arranged in the peripheral area 41b.

The second area 42 has a central area 42a and a peripheral area 42b. The second area 42 indicates an area of content preferred by a specific emotion type B. In this case, it means that content arranged in the central area 42a is the content preferred by the user of the emotion type B rather than content arranged in the peripheral area 42b.

The third area 43 has a central area 43a and a peripheral area 43b. The third area 43 indicates an area of content preferred by a specific emotion type C. In this case, it means that content arranged in the central area 43a is the content preferred by the user of the emotion type C rather than content arranged in the peripheral area 43b.

The fourth area 44 has a central area 44a and a peripheral area 44b. The fourth area 44 illustrates an area of content preferred by a specific emotion type D. In this case, it means that content arranged in the central area 44a is the content preferred by the user of the emotion type D rather than content arranged in the peripheral area 44b.

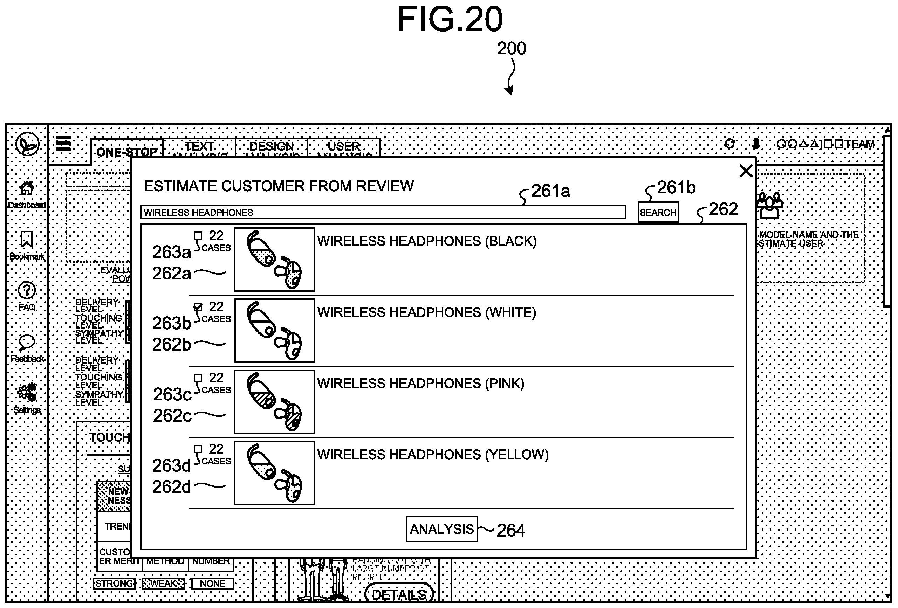

Each of the first area 41 to the fourth area 44 overlaps with any of the areas. It means that content arranged in an overlapping range is preferred by users of both emotion types. In the example illustrated in FIG. 20, the content 14 is arranged in the overlapping range between the peripheral area 41b and the peripheral area 44b. This means that the content 14 is preferred by users of both the emotion type A and the emotion type D. That is, a fan base of certain content is visualized in the content fan map CM2. Therefore, it becomes easy to confirm whether certain content is preferred by a plurality of users by confirming the content fan map CM2. In other words, it becomes easy to confirm which emotion type users who make up the fan base of certain content belong to.

Next, a method of analyzing an emotion type of a user who uses content in the emotion calculation device 100 will be described.

In FIG. 7, content to be analyzed can be input to the emotion calculation device 100 by selecting the content input tab.

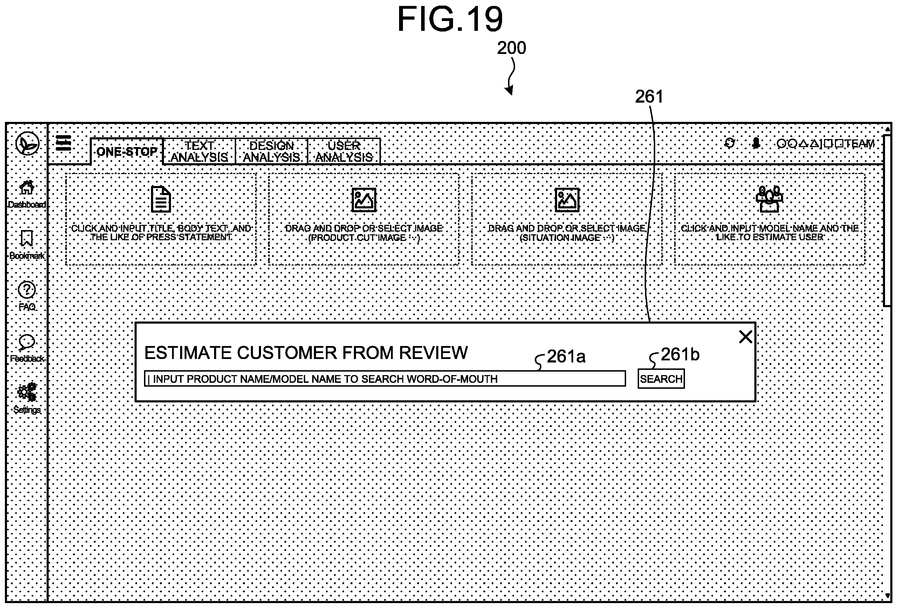

A method of inputting the content to the emotion calculation device 100 will be described with reference to FIG. 19.

FIG. 19 is a schematic view illustrating an example of the method of inputting the content to the emotion calculation device 100.

If the text input tab 240 is selected as illustrated in FIG. 19, for example, the display control unit 126 pops up and displays a content input screen 261 in the user interface 200. The content input screen 261 illustrates a content input area 261a and a search button 261b.

In the content input area 261a, a name of the content to be analyzed is input. If the search button 261b is selected after inputting the content in the content input area 261a, search results for word-of-mouth and a review of the input content are displayed. Here, the acquisition unit 121 acquires the word-of-mouth and a review of the input content.

The search result of input content will be described with reference to FIG. 20. FIG. 20 is a schematic view illustrating an example of the search result.

As illustrated in FIG. 20, a plurality of products having the same content in different colors are displayed in a search result 262. Here, the products are, for example, wireless headphones. Specifically, first content information 262a, second content information 262b, third content information 262c, and fourth content information 262d are illustrated. The first content information 262a includes a first selection button 263a. The second content information 262b includes a second selection button 263b. The third content information 262c includes a third selection button 263c. The fourth content information 262d includes a fourth selection button 263d. It is possible to select content to be analyzed by selecting each selection button. The calculation unit 122 executes the analysis of a user's emotion type for the selected content by selecting an analysis button 264 after selecting the content to be analyzed.

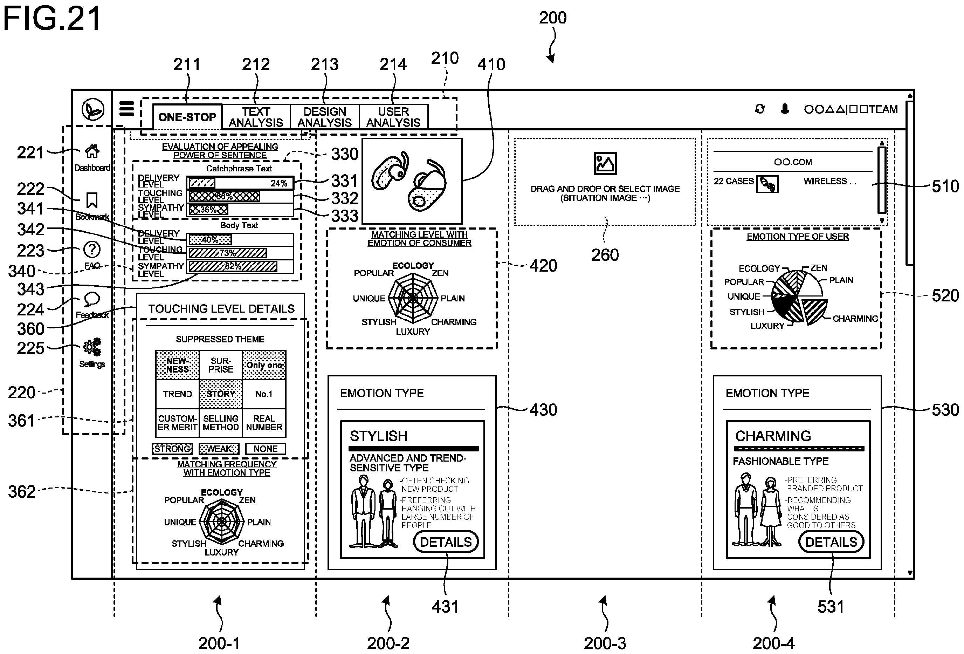

An analysis result of an emotion type will be described with reference to FIG. 21. FIG. 21 is a schematic view illustrating an example of the analysis result of the emotion type of a user for content.

As illustrated in FIG. 21, selected content 510, emotion type information 520, and a most emotion type 530 are illustrated in the fourth area 200-4 of the user interface 200.

The selected content 510 indicates content selected by the user of the emotion calculation device 100.

The emotion type information 520 is displayed adjacent to the selected content 510. The emotion type information 520 indicates proportions of users of emotion types using the selected content 510. The display control unit 126 illustrates a proportion of each emotion type in a radar chart. As a result, it is possible to grasp whether a product corresponding to the selected content 510 matches an assumed emotion type. The emotion type information indicates that the emotion type has a high utilization rate of charming users.

The most emotion type 530 is displayed adjacent to the emotion type information 520. The most emotion type 530 is an emotion type with the highest utilization rate of the selected content 510. Here, "charming" is illustrated as the most emotion type. It is illustrated that the charming users correspond to a "fashionable type". "Preferring a branded product" and "recommending what is considered as good to others" are illustrated as characteristics of the charming users. Further, the most emotion type 530 includes a details button 531. It is possible to confirm the characteristics of the user whose emotion type is "charming" by selecting the details button 531. A method of displaying the details is similar to that in the case of the optimal emotion type 430, and thus, the description thereof will be omitted.

Although a text, an image, and the like are displayed side by side on the one-stop screen, only the texts can be displayed side by side and compared by selecting the text analysis tab 212 in the present disclosure.

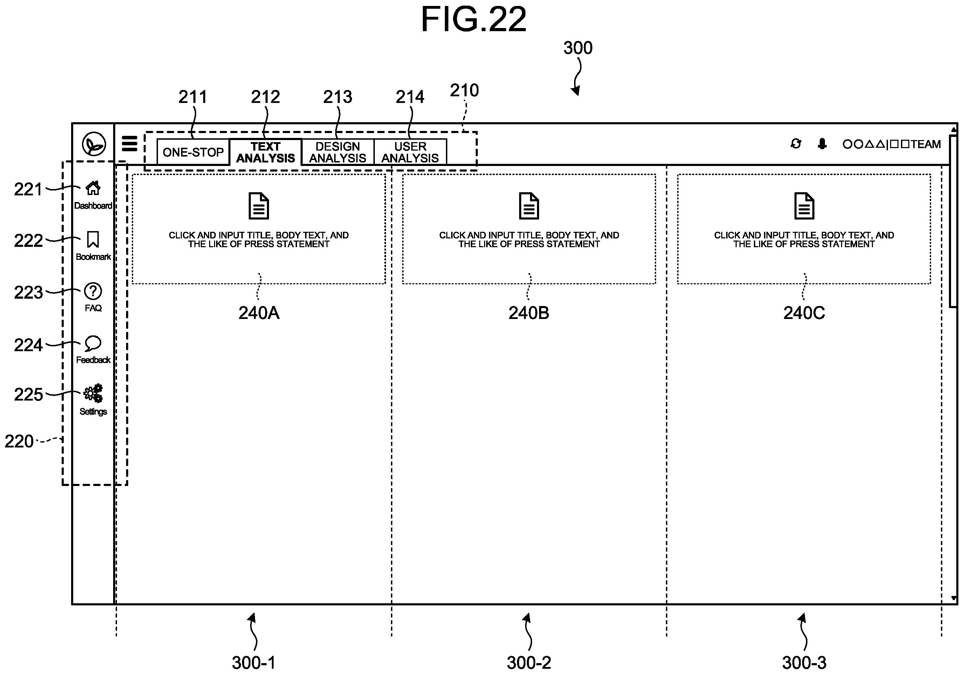

The text analysis screen will be described with reference to FIG. 22. FIG. 22 is a schematic view illustrating a user interface 300 of the text analysis screen. For example, the state of the user interface 200 on the one-stop screen switches to the user interface 300 by selecting the text analysis tab 212. In other words, the display control unit 126 switches from the user interface 200 to the user interface 300.

As illustrated in FIG. 22, the user interface 300 includes a first text input tab 240A in a first area 300-1, a second text input tab 240B in a second area 300-2, and a third text input tab 240C in a third area 300-3. It is possible to input different texts by selecting the first text input tab 240A, the second text input tab 240B, and the third text input tab 240C. Note that a method of inputting and analyzing a text is similar to that in the case of the user interface 200, and thus, the description thereof will be omitted. Further, three text input tabs are included in FIG. 22, but this is illustrative and does not limit the present disclosure. In the present disclosure, for example, the number of texts to be displayed side by side can be freely set by selecting the text analysis tab 212.

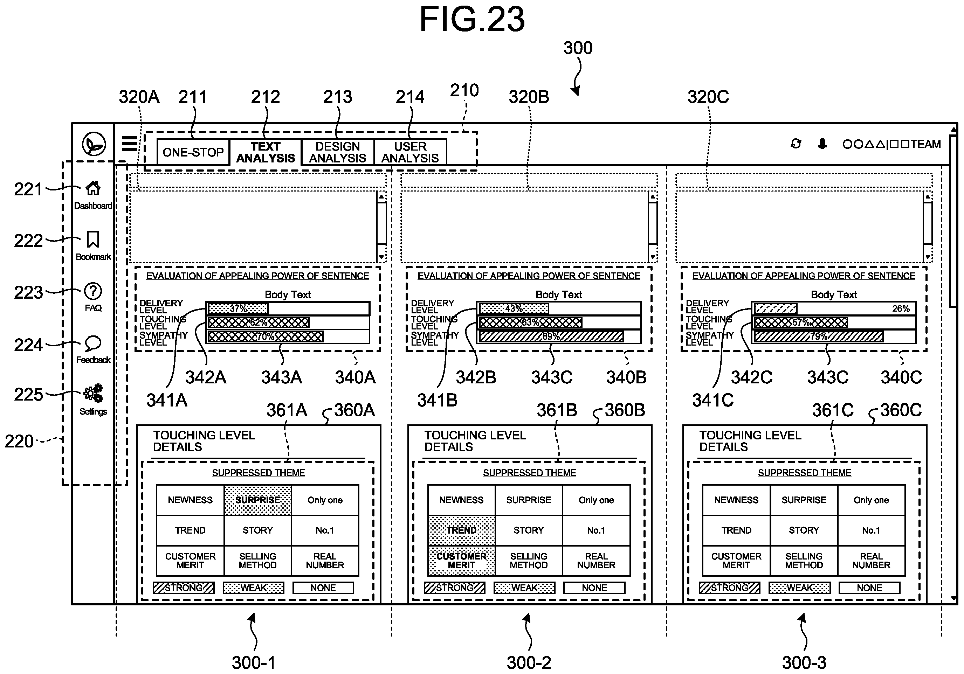

A text analysis result will be described with reference to FIG. 23. FIG. 23 is a schematic view illustrating an example of the text analysis result.

As illustrated in FIG. 23, the first area 300-1 of the user interface 300 illustrates a body text 320A, body text appealing power 340A, and a theme 361A of touching level details 360A. For example, "AAA is..." is described in the body text 320A.

The body text appealing power 340A includes a delivery level 341A, a touching level 342A, and an expression tendency 343A. The delivery level 341A is 37%. The touching level 342A is 62%. The expression tendency 343A is 70%.

When the theme 361A is referred to, it is illustrated that the body text 320A weakly touches "surprise" as a theme.

The second area 300-2 of the user interface 300 illustrates a body text 320B, body text appealing power 340B, and a theme 361B of touching level details 360B. For example, "BBB is..." is described in the body text 320B.

The body text appealing power 340B includes a delivery level 341B, a touching level 342B, and an expression tendency 343B. The delivery level 341B is 43%. The touching level 342B is 63%. An expression tendency 343C is 89%. That is, it is illustrated that the body text 320B is relatively strongly sympathetic.

When the theme 361B is referred to, it is illustrated that the body text 320B weakly touches "trend" and "customer merit" as a theme.

The third area 300-3 of the user interface 300 illustrates a body text 320C, body text appealing power 340C, and a theme 361C of touching level details 360C. For example, "CCC is..." is described in the body text 320C.

The body text appealing power 340C includes a delivery level 341C, a touching level 342C, and an expression tendency 343C. The delivery level 341C is 26%. The touching level 342C is 57%. The expression tendency 343C is 79%. That is, it is illustrated that the body text 320C is relatively undelivered.

When the theme 361C is referred to, it is illustrated that the body text 320C touches none as a theme.

As described above, the appealing power of each text can be easily compared by displaying a plurality of texts side by side on the text analysis screen. Therefore, it is possible to execute a simulation for appealing power to a user and a matching frequency with the assumed user at the time of examining or creating a catchphrase and a body text of a site, a promotional material, an advertisement, and the like. As a result, the user can optimize a sentence on the text analysis screen and select and determine a candidate to be adopted among the plurality of candidates.

Although a text, an image, and the like are displayed side by side on the one-stop screen, only the images can be displayed side by side and compared by selecting the design analysis tab 213 in the present disclosure.

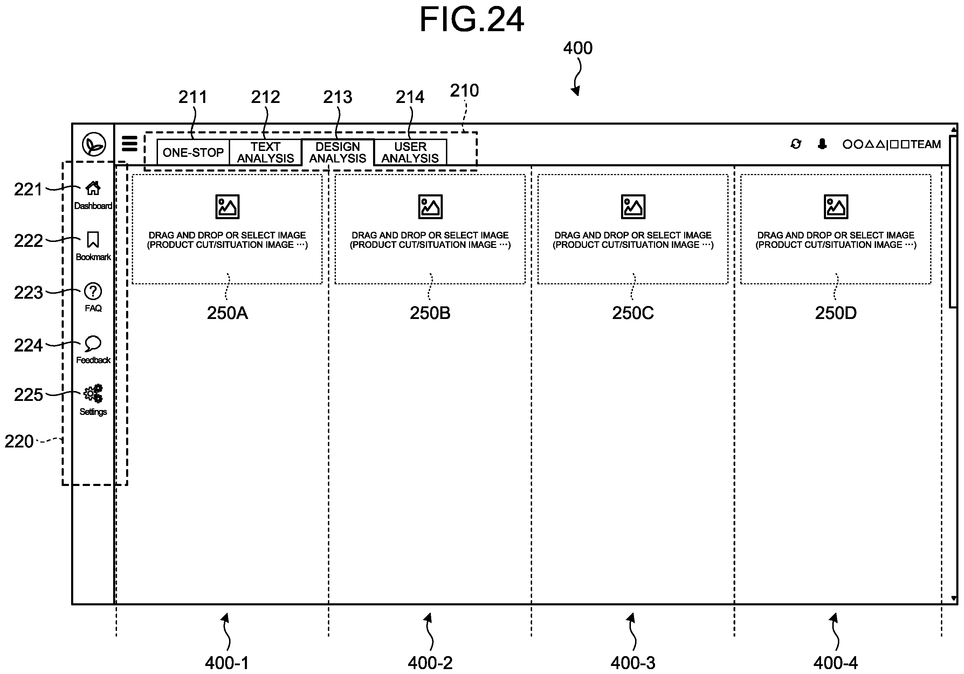

The design analysis screen will be described with reference to FIG. 24. FIG. 24 is a schematic view illustrating a user interface 400 of the design analysis screen. For example, the state of the user interface 200 on the one-stop screen switches to the user interface 400 by selecting the design analysis tab 213. In other words, the display control unit 126 switches from the user interface 200 to the user interface 400.

As illustrated in FIG. 24, the user interface 400 includes a first image input tab 250A in a first area 400-1, a second image input tab 250B in a second area 400-2, a third image input tab 250C in a third area 400-3, and a fourth image input tab 250D in a fourth area 400-4. It is possible to input different images by selecting the first image input tab 250A, the second image input tab 250B, the third image input tab 250C, and the fourth image input tab 250D. Note that a method of inputting and analyzing a text is similar to that in the case of the user interface 200, and thus, the description thereof will be omitted. Further, four image input tabs are included in FIG. 24, but this is illustrative and does not limit the present disclosure. In the present disclosure, for example, the number of texts to be displayed side by side can be freely set by selecting the design analysis tab 213.

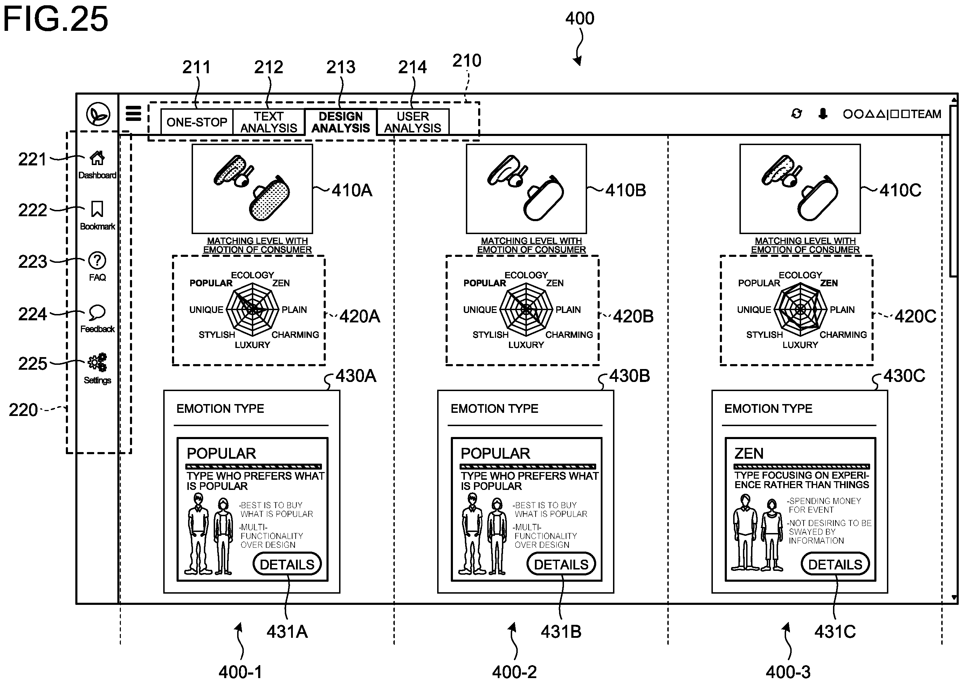

A design analysis result will be described with reference to FIG. 25. FIG. 25 is a schematic view illustrating an example of the design analysis result.

As illustrated in FIG. 25, the first area 400-1 of the user interface 400 include product image data 410A, matching information 420A, and an optimal emotion type 430A.

The product image data 410A is image data input by a user. The product image data 410A is, for example, black wireless headphones.

The matching information 420A is a radar chart illustrating a matching frequency of each emotion type with respect to the product image data 410A. That is, the matching information 420A is the radar chart illustrating a customer image of each emotion type. The matching information 420A indicates that the product image data 410A has a high matching frequency with a user whose emotion type is "popular".

The optimal emotion type 430A is an emotion type with the highest matching frequency. Here, "popular" is illustrated as the optimal emotion type. It is illustrated that popular users correspond to a "type who prefers what is popular." Considering that "the best is to buy what is popular" and preferring "multifunctionality over a design" are illustrated as characteristics of the popular users. Further, the optimal emotion type 430A includes a details button 431A. It is possible to confirm details of the characteristics of the user whose emotion type is "popular" by selecting the details button 431A.

The second area 400-2 of the user interface 400 includes product image data 410B, matching information 420B, and an optimal emotion type 430B.

The product image data 410B is image data input by a user. The product image data 410B is, for example, white wireless headphones having a different color from the product image data 410A. That is, the product image data 410B is image data of a product having the same content and a different color generated based on the product image data 410A.

The matching information 420B is a radar chart illustrating a matching frequency of each emotion type with respect to the product image data 410B. The matching information 420B indicates that the product image data 410B has a high matching frequency with a user whose emotion type is "popular".

The optimal emotion type 430B is an emotion type with the highest matching frequency. Here, "popular" is illustrated as the optimal emotion type. The optimal emotion type 430B includes a details button 431B. It is possible to confirm details of the characteristics of the user whose emotion type is "popular" by selecting the details button 431B.

The third area 400-3 of the user interface 400 includes product image data 410C, matching information 420C, and an optimal emotion type 430C.

The product image data 410C is image data input by a user. The product image data 410C is, for example, yellow wireless headphones having a different color from the product image data 410A and the product image data 410B. That is, the product image data 410C is image data of a product having the same content and a different color generated based on the product image data 410A and the product image data 410B.

The matching information 420C is a radar chart illustrating a matching frequency of each emotion type with respect to the product image data 410C. The matching information 420C indicates that the product image data 410C has a high matching frequency with a user whose emotion type is "ZEN".

The optimal emotion type 430C is an emotion type with the highest matching frequency. Here, "ZEN" is illustrated as the optimal emotion type. It is illustrated that ZEN users correspond to a "type focusing on experience rather than things". "Spending money for an event" and "not desiring to be swayed by information" are illustrated as characteristics of the ZEN users. Further, the optimal emotion type 430C includes a details button 431C. It is possible to confirm details of the characteristics of the user whose emotion type is "popular" by selecting the details button 431C.

As described above, the matching frequency of each emotion type can be calculated for each color variation in the same product on the design analysis screen. That is, the design analysis screen is advantageous when examining a product design or a color variation according to the assumed user's emotion type or creating and examining an image cut for a site, a promotional material, an advertisement, and the like Specifically, it is possible to optimize and select a product concept while simulating the matching frequency of the assumed user's emotion type or to compare the emotion appealing power and its direction of the product design between the own company and a competitor on the design analysis screen. As a result, it is easy to confirm the consistency between the product design and the image cut.

In the user interface 400, review information including a review and word-of-mouth for a product in an input image may be collected from SNS or the like, and analysis on the word-of-mouth may be executed. For example, a user's evaluation for the black wireless headphones input as the product image data 410A may be calculated in five stages from 1 to 5. In this case, 1 indicates the lowest rating and 5 indicates the highest rating. In the user interface 400, a VOC for the black wireless headphones input as the product image data 410A may be displayed as a frequent word. In this case, a content of the VOC content may be evaluated in real time. Further, the VOC for the black wireless headphones input as the product image data 410A may be automatically categorized and displayed in the user interface 400. Words such as "high note" and "noise" may be categorized as "sound quality" based on the VOC for the black wireless headphones input as product image data 410A.

As a result, in the user interface 400, it is possible to calculate a user image of the product in the input image or a user image whose use is expected based on the review information including Web roaming history, the word-of-mouth on SNS, the VOC, and word-of-mouth on an EC site or the like. That is, it is possible to calculate an emotion type of the user who is using the product in the input image or an emotion type of the user whose use is expected. Specifically, it is possible to calculate a fan base of a certain product brand or artist.

Further, a frequent word for each emotion type may be displayed or VOCs may be categorized for each emotion type by selecting the emotion type displayed on the radar chart of the matching information 420A in the user interface 400.

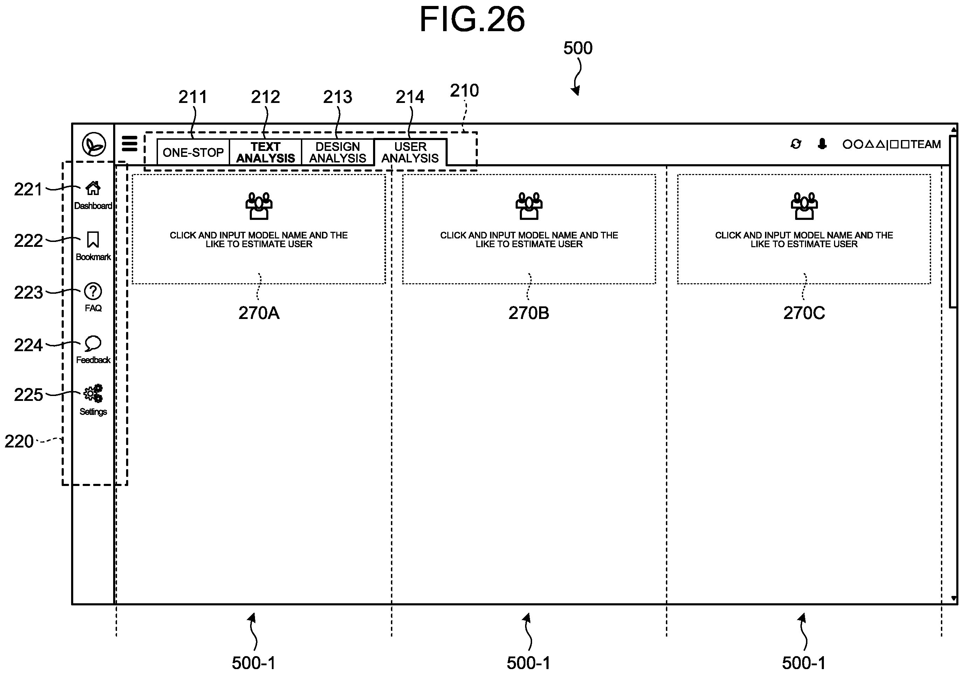

The user analysis screen will be described with reference to FIG. 26. FIG. 26 is a schematic view illustrating a user interface 500 of the user analysis screen. For example, the state of the user interface 200 on the one-stop screen switches to the user interface 500 by selecting the user analysis tab 214. In other words, the display control unit 126 switches from the user interface 200 to the user interface 500.

As illustrated in FIG. 26, the user interface 500 includes a first content input tab 270A in a first area 500-1, a second content input tab 270B in a second area 500-2, and a third content input tab 270C in a third area 500-3. It is possible to input different images by selecting the first content input tab 270A, the second content input tab 270B, and the third content input tab 270C. Note that a method of inputting and analyzing a content is similar to that in the case of the user interface 200, and thus, the description thereof will be omitted. Further, three content input tabs are included in FIG. 26, but this is illustrative and does not limit the present disclosure. In the present disclosure, for example, the number of texts to be displayed side by side can be freely set by selecting the user analysis tab 214.

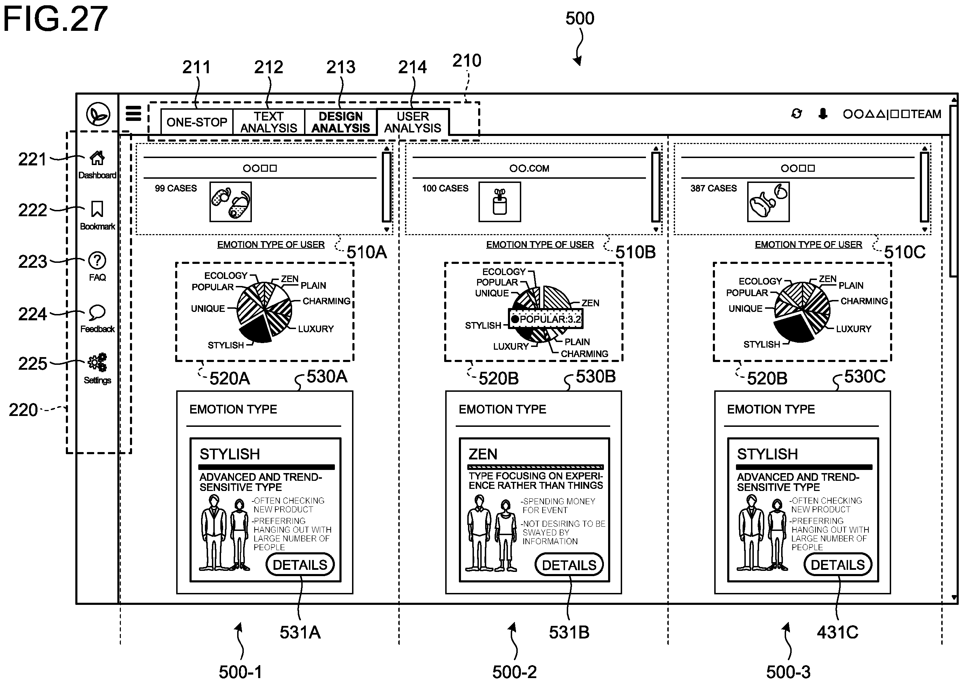

A content analysis result will be described with reference to FIG. 27. FIG. 27 is a schematic view illustrating an example of the content analysis result.

As illustrated in FIG. 27, the first area 500-1 of the user interface 500 includes selected content 510A, emotion type information 520A, and a most emotion type 530A.

The selected content 510A is content information that has been input by a user and needs to be analyzed. The selected content 510A is, for example, a first product related to wireless headphones.

The emotion type information 520A is a radar chart indicating proportions of users of emotion types using the selected content 510. The emotion type information 520A indicates that "stylish" is the most emotion type of the user using the selected content 510A.

The most emotion type 530A is an emotion type with the highest utilization rate of the selected content 510A. Here, "stylish" is illustrated as the most emotion type. Further, the most emotion type 530A includes a details button 531A. It is possible to confirm details of characteristics of the user whose emotion type is "stylish" by selecting the details button 531A.

The second area 500-2 of the user interface 500 includes selected content 510B, emotion type information 520B, and a most emotion type 530B.

The selected content 510B is content information that has been input by a user and needs to be analyzed. The selected content 510B is, for example, a second product related to wireless headphones.

The emotion type information 520B is a radar chart indicating proportions of users of emotion types using the selected content 510. The emotion type information 520B indicates that "ZEN" is the most emotion type of the user using the selected content 510B.

The most emotion type 530B is an emotion type with the highest utilization rate of the selected content 510B. Here, "ZEN" is illustrated as the most emotion type. Further, the most emotion type 530B includes a details button 531B. It is possible to confirm details of the characteristics of the user whose emotion type is "ZEN" by selecting the details button 531B.

The third area 500-3 of the user interface 500 includes selected content 510C, emotion type information 520C, and a most emotion type 530C.

The selected content 510C is content information that has been input by a user and needs to be analyzed. The selected content 510C is, for example, a third product related to wireless headphones.

The emotion type information 520C is a radar chart indicating proportions of users of emotion types using the selected content 510. The emotion type information 510cC indicates that "stylish" is the most emotion type of the user using the selected content 510B.

The most emotion type 530C is an emotion type with the highest utilization rate of the selected content 510C. Here, "stylish" is illustrated as the most emotion type. Further, the most emotion type 530C includes a details button 531C. It is possible to confirm details of characteristics of the user whose emotion type is "stylish" by selecting the details button 531C.

As described above, on the content analysis screen, it is possible to, for example, compare a user's emotion type between line-ups of the same product of the own company, compare an old model and a new model of a product of the own company, or compare a product of the own company and a product of another company. As a result, it is possible to grasp a gap between an assumed emotion type and an emotion type actually using the product and grasp proportions of emotion types of users actually using the product, for example, on the user analysis screen. It becomes easy to confirm the validity of a marketing measure and improve a future marketing measure by using an analysis result on the user analysis screen.

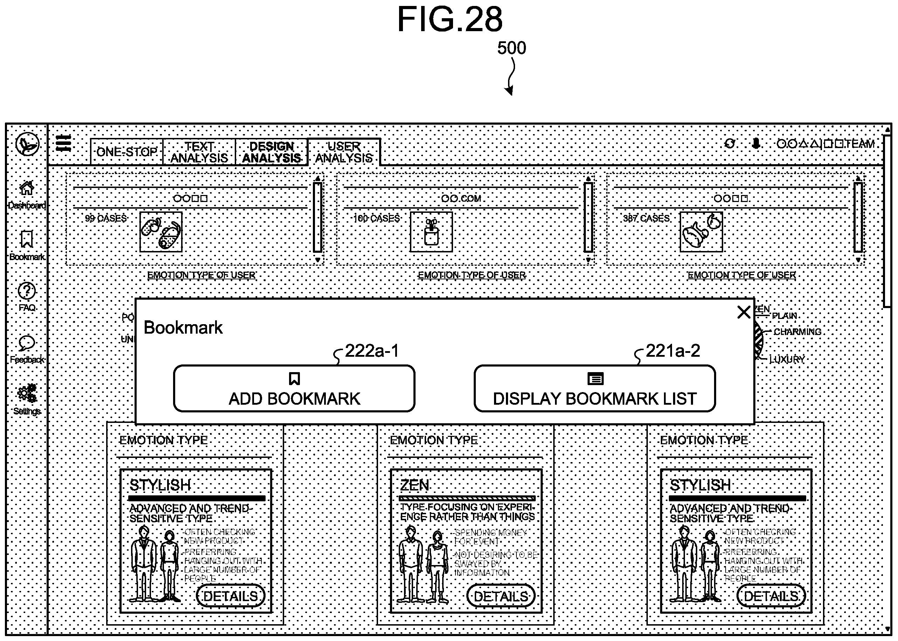

Next, a process of saving an analysis result will be described with reference to FIG. 28. FIG. 28 is a schematic view illustrating an example of the process of saving the analysis result.

For example, an analysis result displayed on the content analysis screen illustrated in FIG. 27 is saved. In this case, if the bookmark tab 222 arranged in the menu bar 220 is selected on the screen where the analysis result is displayed, a bookmark selection screen 222a as illustrated in FIG. 28 is popped up and displayed in the user interface 500.

As illustrated in FIG. 28, a bookmark selection screen 222b includes a bookmark tab 222a-1 and a bookmark list tab 222a-2. If the bookmark tab 222a-1 is selected, the analysis result displayed on the content analysis screen is saved as a bookmark. This is similarly applied even to the one-stop screen, the text analysis screen, and the design analysis screen. On the other hand, if the bookmark list tab 222a-2 is selected, bookmarks saved in the past are displayed in a list.

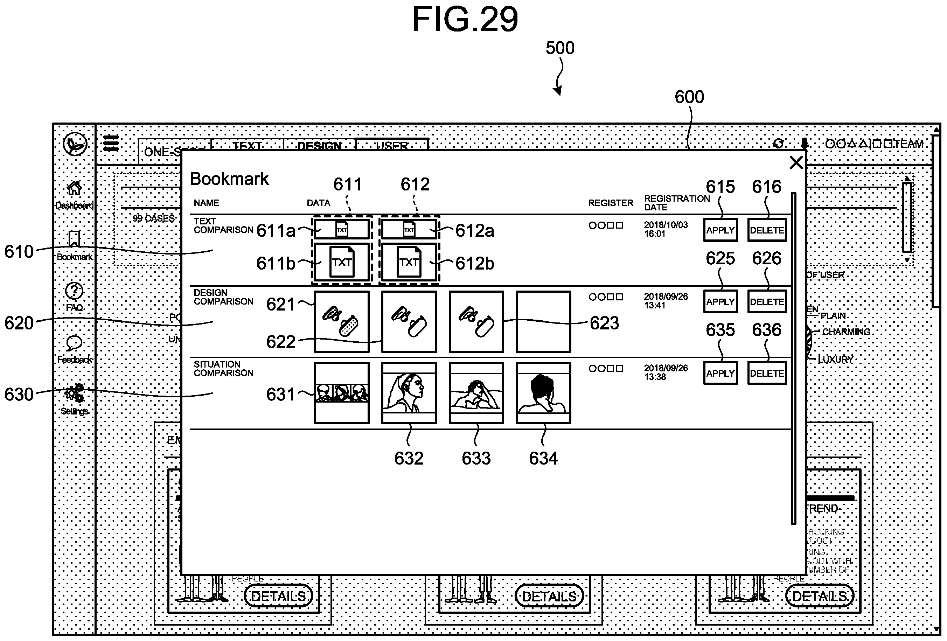

An example of a bookmark list will be described with reference to FIG. 29. FIG. 29 is a schematic view for describing an example of the bookmark list.

As illustrated in FIG. 29, a bookmark list 600 includes, for example, a text analysis result 610, a design comparison result 620, and a situation comparison result 630.

The text analysis result 610 is a result of text analysis performed in the past. Specifically, the text analysis result 610 is the analysis result of a first text 611 and a second text 612, and a registrant of the analysis result and a registration date are saved in association with each other. The first text 611 is a text including a title 611a and a body text 611b. The second text 612 is a text including a title 612a and a body text 612b. Further, the text analysis result 610 includes an apply button 615 and a delete button 616. If the apply button 615 is selected, details of the text analysis result 610 are displayed. If the delete button 616 is selected, the text analysis result 610 is deleted.

A design comparison result 620 is a result of design analysis performed in the past. Specifically, the design comparison result 620 is the analysis result of first product image data 621, second product image data 622, and third situation image data 633, and a registrant of the analysis result and a registration date are recorded in association with each other. The first product image data 621, the second product image data 622, and the third product image data 623 are, for example, image data of different color versions of the same product. Further, the design comparison result 620 includes an apply button 625 and a delete button 626. If the apply button 625 is selected, details of the design comparison result 620 are displayed. If the delete button 626 is selected, the design comparison result 620 is deleted.

The situation comparison result 630 is a result of analysis of a situation image performed in the past. Specifically, the situation comparison result 630 is an analysis result of first situation image data 631, second situation image data 632, third situation image data 633, and fourth situation image data 634. In the situation comparison result 630, a registrant of the analysis result and a registration date are associated with each other. Further, the situation comparison result 630 includes an apply button 635 and a delete button 636. If the apply button 635 is selected, details of the situation comparison result 630 are displayed. If the delete button 636 is selected, the situation comparison result 630 is deleted.

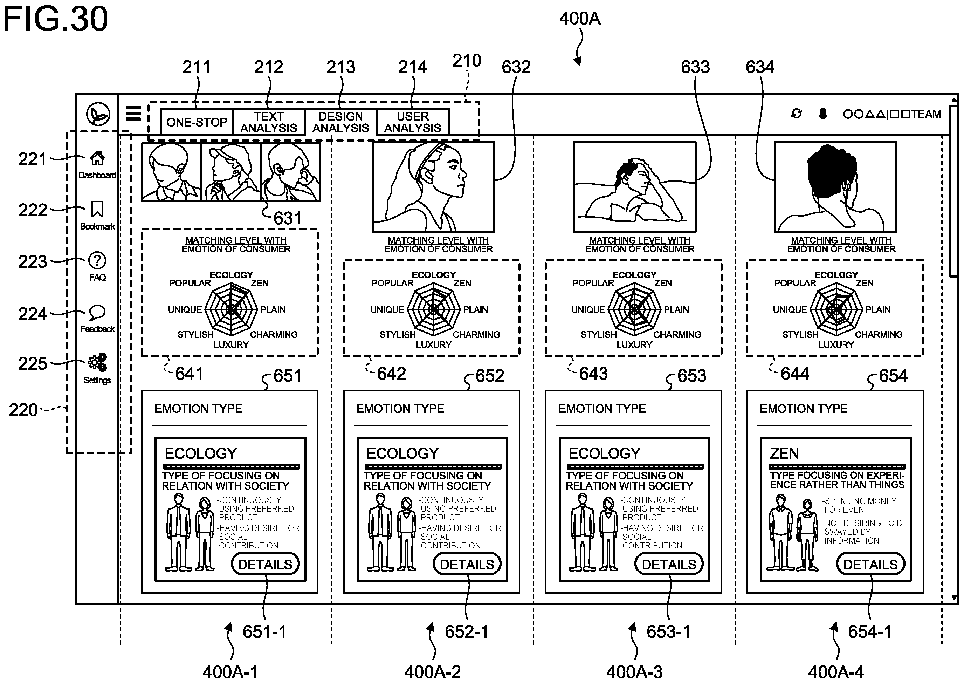

A method of displaying details of a result of analysis performed in the past will be described with reference to FIG. 30. FIG. 30 is a schematic view illustrating the details of the result of analysis performed in the past.

FIG. 30 illustrates a user interface 400A illustrating the situation comparison result 630 in a state where the apply button 635 has been selected in FIG. 29.

As illustrated in FIG. 30, a first area 400A-1 of the user interface 400A includes the first situation image data 631, matching information 641, and an optimal emotion type 651. The matching information 641 indicates that the first situation image data 631 has the highest matching frequency with a user whose emotion type is "ecology". The optimal emotion type 651 indicates the emotion type with the highest matching frequency. The optimal emotion type 651 includes a details button 651-1. Note that details of the matching information and the optimal emotion type are similar to those in the case of the user interface 400, and thus, the description thereof will be omitted.

A second area 400A-2 of the user interface 400A includes the second situation image data 632, matching information 642, and an optimal emotion type 652. The matching information 642 indicates that the second situation image data 632 has the highest matching frequency with a user whose emotion type is "ecology". The optimal emotion type 652 indicates the emotion type with the highest matching frequency. The optimal emotion type 652 includes a details button 652-1.

A third area 400A-3 of the user interface 400A includes the third situation image data 633, matching information 643, and an optimal emotion type 653. The matching information 643 indicates that the third situation image data 633 has the highest matching frequency with a user whose emotion type is "ecology". The optimal emotion type 653 indicates the emotion type with the highest matching frequency. The optimal emotion type 653 includes a details button 653-1.

A fourth area 400A-4 of the user interface 400A includes the fourth situation image data 634, matching information 644, and an optimal emotion type 654. The matching information 644 indicates that the fourth situation image data 634 has the highest matching frequency with a user whose emotion type is "ecology". The optimal emotion type 654 indicates the emotion type with the highest matching frequency. The optimal emotion type 654 includes a details button 654-1.

As described above, the results of analysis performed in the past can be displayed in the present disclosure. As a result, for example, it becomes easy to confirm a result of analysis performed by another user or to utilize the past analysis result.

In the present disclosure, a file of the text or image data used for each analysis described above can be supplied, for example, by members within a project by selecting the settings tab 225. In this case, the file is stored, for example, on a database shared by the project members.

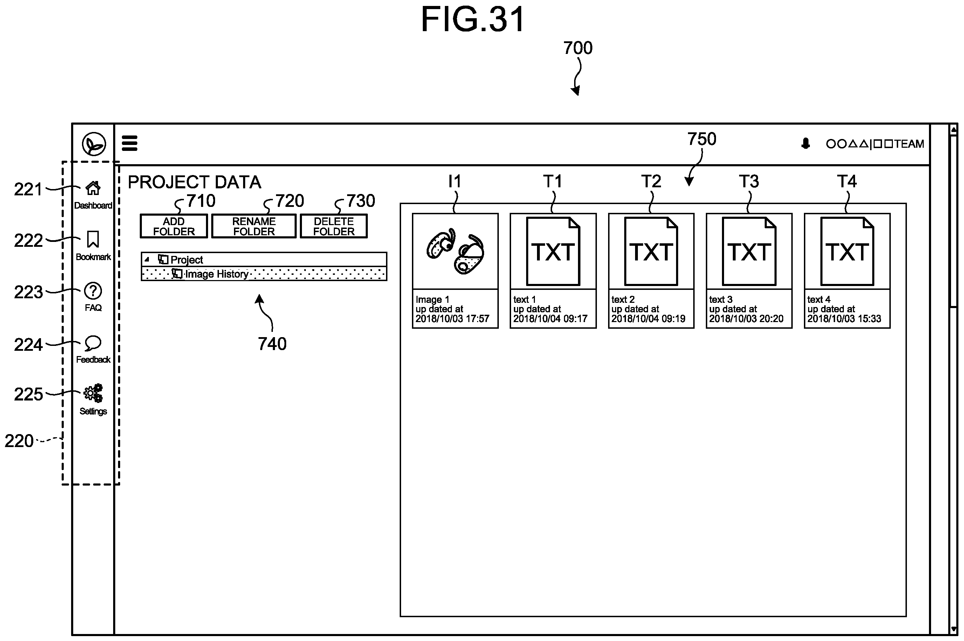

A method of sharing the file by the project members will be described with reference to FIG. 31. FIG. 31 is a schematic view illustrating a user interface of a shared screen.

As illustrated in FIG. 31, a user interface 700 has a folder add button 710, a folder rename button 720, a folder delete button 730, a folder display area 740, and a file display area 750.

It is possible to add a folder to store a file by selecting the folder add button 710. The added folder is displayed in the folder display area 740.

A folder name displayed in the folder display area 740 can be changed by selecting the folder rename button 720.

A folder displayed in the folder display area 740 can be deleted by selecting the folder delete button 730.

A folder stored in a shared database is displayed in the folder display area 740. For example, in FIG. 31, an "Image History" folder in a "Project" folder is selected.

A file stored in the folder is displayed in the file display area 750. Specifically, the file display area 750 displays a file in the folder selected in the folder display area 740. Here, an image file I1 and text files T1 to T4 are stored. In each file, a file name and the last update date are associated with each other. For example, it is illustrated that the file name of the image file I1 is "Image 1" and the last update date is "October 3, 2018 17:57". A user of the emotion calculation device 100 or the like can freely use the file displayed in the file display area 750 for analysis or the like.

As described above, it is possible to use the file that has been used in the past by the project member or the like in the present disclosure. As a result, the past material that has been used for analysis can be used, which is advantageous.

### (3. Other Embodiments)

### [3-1. Discovery Device]

Next, techniques according to other embodiments of the present disclosure will be described.

In the above-described embodiment, the matching frequency indicating the emotional sense of values with the product is calculated according to the user's emotion type. The present disclosure can be applied not only to the product but also to entertainment fields such as music.

Conventionally, in the entertainment fields, a person in charge discovers a new musician or idol by listening to a sound source posted on a music activity support platform or watching a moving image posted on SNS. However, the number of these sound sources and videos is enormous, and new sound sources and videos are registered every day. Thus, it is difficult to manually check all the registered sound sources and videos. Further, when a new artist such as a musician has been discovered, there is a case where the person in charge understands a characteristic of the artist, assumes fans, and examines a measure to sell the artist. In this case, the person in charge, for example, conducts a hearing from related parties and predicts the sales forecast of the artist and an assumed fan base of the artist based on a result of the hearing. Further, there is a case where the person in charge takes a measure to sell the artist based on his or her intuition and experience. In this case, there is a possibility that it is difficult to analyze the causal relationship between a measure and a result even if the artist is successful.

Therefore, a technique capable of automatically discovering a new musician, idol, or the like is provided in another embodiment of the present disclosure. Further, there is provided a technique capable of automatically calculating a commercial value of an artist such as a musician in another embodiment of the present disclosure. Further, there is provided a technique capable of generating a concrete image (hereinafter, also referred to as a persona image) of an assumed fan of an artist in another embodiment of the present disclosure. Further, another embodiment of the present disclosure discloses a settled level to the public of an artist and a technique capable of automatically analyzing topics related to the artist.

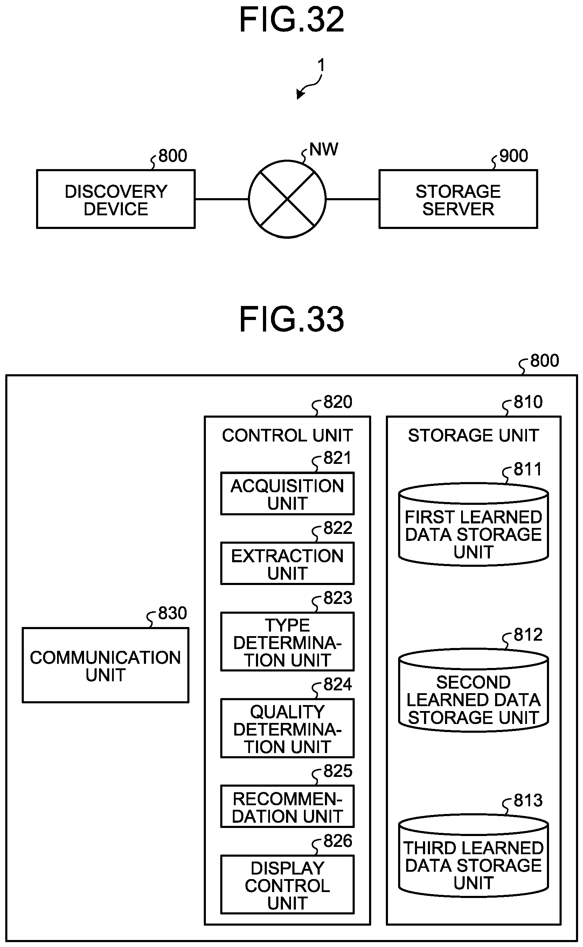

A configuration of a discovery system according to another embodiment of the present disclosure will be described with reference to FIG. 32. FIG. 32 is a diagram illustrating an example of the configuration of the discovery system according to another embodiment of the present disclosure.

As illustrated in FIG. 32, the discovery system 1 includes a discovery device 800 and a storage server 900. The discovery device 800 acquires sound source files related to various sound sources and video files related to videos saved in the storage server 900. The discovery device 800 discovers a person who can be a musician or an idol based on the acquired sound source file or video file. The discovery device 800 determines a quality including a talent of the detected person. The discovery device 800 determines whether the quality of the detected person satisfies a predetermined condition. The discovery device 800 recommends a person who has been determined to satisfy the predetermined condition to a user of the discovery device 800.

The storage server 900 stores various music files, video files, and the like. The storage server 900 includes, for example, a server of a music support platform on which a user can post a song. The storage server 900 includes, for example, an SNS server such as various video sharing services. In the example illustrated in FIG. 32, the discovery device 800 is illustrated to be connected to one storage server 900, but the discovery device 800 is connected to a plurality of the storage servers 900.

The configuration of the discovery device according to another embodiment of the present disclosure will be described with reference to FIG. 33. FIG. 33 is a block diagram illustrating an example of the configuration of the discovery device according to another embodiment of the present disclosure.

As illustrated in FIG. 33, the discovery device 800 includes a storage unit 810, a control unit 820, and a communication unit 830.

The storage unit 810 stores various types of information. The storage unit 810 stores, for example, a program for realizing each unit of the discovery device 800. In this case, the control unit 820 realizes a function of each unit by expanding and executing the program stored in the storage unit 810. The storage unit 810 can be realized by, for example, a semiconductor memory element such as a RAM, a ROM, and a flash memory, or a storage device such as a hard disk, a solid state drive, and an optical disk. The storage unit 810 may be an external storage device connected to the discovery device 800 in a wired or wireless manner via the communication unit 830. In this case, the communication unit 830 is connected to a network NW such as an Internet network illustrated in FIG. 32. The storage unit 810 includes, for example, a first learned data storage unit 811, a second learned data storage unit 812, and a third learned data storage unit 813.

The first learned data storage unit 811 to the third learned data storage unit 813 store learned data that has been learned. The first learned data storage unit 811 to the third learned data storage unit 813 store information on a learned model. The first learned data storage unit 811 to the third learned data storage unit 813 store information on a conditional expression of the learned model. For example, a neural network such as a convolutional neural network (CNN) is used as a learning model (a classifier or the like) at the time of generating the learned model, but the learning model is not limited thereto. As the learning model, a learning model such as support vector machine (SVM) and a decision tree may be used. Various linear or non-linear learning models may be used as the learning model.

Specifically, the first learned data storage unit 811 stores a learned model that outputs a commercial value of an artist when various types of information on the artist is input. Examples of the various types of information on the artist include musicality information, vocal type information, and live show customer attraction information regarding live show customer attraction. An example of the musicality information is information obtained by converting a feature value extracted by using a 12-sound analysis technique for a sound source of the artist into an adjective. As the adjective, for example, one or a combination of two or more among a plurality of (for example, 62) predetermined adjectives is used. An example of the vocal type information is information in which a vocal sound source extracted using a sound source separation technique for the sound source of the artist is classified by type according to a frequency. As the vocal type, one of a plurality of predetermined types (for example, 27 types) is used for the vocal sound source according to an analysis result of the frequency analysis. Examples of the live show customer attraction information include information on a type of event including a festival, a live show, a dinner show, and the like in which the artist appeared, and information on the capacity of a venue where the event was held.

The second learned data storage unit 812 stores a learned model indicating whether a person is likely to become popular when image data of a face of the person is input. When image data of a face of a person is input, the second learned data storage unit 812 outputs information indicating whether the person is likely to be popular as an idol.

The third learned data storage unit 813 stores a learned model indicating whether a person included in a photo or a video is likely to become popular when information on content of a still image or a video registered in, for example, a photo sharing service or a video sharing service is input. Examples of the information on the content include information on a title of the content, information on a text embedded in a still image or a video, and information on a sound contained in a video. Examples of the information on the content include a frame image constituting a video and information on an object included in the frame image. More specifically, the third learned data storage unit 813 may store a learned model that receives inputs of the number of registered channels, the number of playbacks, the number of followers, the number of comments, and the like and outputs a fashionability level of a still image and a video. The third learned data storage unit 813 may store a learned model that receives an input of an image of a face of a person included in a still image or a video and outputs information indicating whether the person is likely to become popular. The third learned data storage unit 813 may store a learned model that receives an input of a title attached to a still image and a video and outputs a catchiness level of the title. The third learned data storage unit 813 may store a learned model that receives inputs of a plurality of frame images constituting a video and outputs an attractiveness level of a thumbnail image. The third learned data storage unit 813 may store a learned model that receives an input of an object included in a still image or a video and outputs information on the newness of each object included in the still image or the video and the unexpectedness of a combination between objects.

The control unit 820 includes an acquisition unit 821, an extraction unit 822, a type determination unit 823, a quality determination unit 824, a recommendation unit 825, and a display control unit 826. The control unit 820 is realized by, for example, a CPU, an MPU, or the like executing a program stored in a storage unit (not illustrated) using a RAM or the like as a work area. Further, the control unit 820 is a controller, and may be realized by an integrated circuit such as an ASIC and an FPGA.

The acquisition unit 821 acquires information on various types of content. The acquisition unit 821 acquires information on a sound source of an artist that needs to be determined from the storage server 900 or the like via the communication unit 830. The acquisition unit 821 acquires information on a still image or a video of a person from the storage server 900 or the like via the communication unit 830.

The extraction unit 822 extracts predetermined content from the content acquired by the acquisition unit 821. The extraction unit 822 extracts content that is likely to become popular from the content acquired by the acquisition unit 821. The extraction unit 822 acquires the number of playbacks, the number of views, the number of followers, the number of likes, a rise rate, and the like of all users (artists or the like) acquired from a music activity support platform or SNS. The extraction unit 822 scores all the users based on the extracted number of playbacks, number of views, number of followers, number of likes, rise rate, and the like, and assigns rankings to all the users. The extraction unit 822 extracts users with the high rankings (for example, up to the 20th place) from all the users. The extraction unit 822 may exclude a person who is already popular or famous from extraction targets.

The type determination unit 823 determines a type as an artist of person extracted by the extraction unit 822. The type determination unit 823 determines whether the extracted person is of any type among an artist type, an idol type, and a talent type. The artist type is a person who is classified as a musician. The idol type is a person who is classified as an idol. The talent type is a person who is classified as a talent who is active in a video sharing service (for example, Youtube (registered trademark)).

The quality determination unit 824 determines a quality of a person classified into an artist type, an idol type, or a talent type which is determined by the type determination unit 823.

When determining a quality of an artist-type person, the quality determination unit 824 determines the quality by using the learned model stored in the first learned data storage unit 811. The quality determination unit 824 determines a quality of a sound source of the artist-type person by using the learned model stored in the first learned data storage unit 811. The quality determination unit 824 uses the learned model stored in the first learned data storage unit 811 to determine whether a song of the artist-type person is likely to become popular. The quality determination unit 824 uses the learned model stored in the first learned data storage unit 811 to determine whether the song is a song with a high commercial value and is vocal characteristic. The quality determination unit 824 uses the learned model stored in the first learned data storage unit 811 to determine whether a live show in which the song can attract customers can be held or a live show that excites a venue can be held.

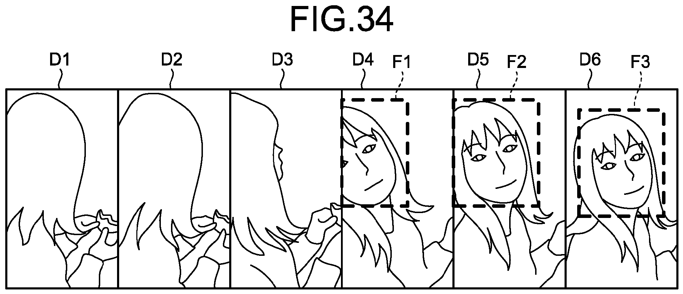

When determining a quality of an idol-type person, the quality determination unit 824 determines the quality by using the learned model stored in the second learned data storage unit 812. The quality determination unit 824 determines a quality of a video or an image of the idol-type person by using the learned model stored in the second learned data storage unit 812. When determining the quality based on the video of the idol-type person, the quality determination unit 824 disassembles a video into a plurality of frame images such as a frame image D1 to a frame image D6 as illustrated in FIG. 34. The quality determination unit 824 detects a face image F1 to a face image F3 in the frame image D4 to the frame image D6. Then, the quality determination unit 824 determines qualities of the detected face image F1 to face image F3 by using the learned model stored in the second learned data storage unit 812. Specifically, the quality determination unit 824 determines whether a face of the person is a face that is likely to become popular.

When determining a quality of a talent-type person, the quality determination unit 824 determines the quality by using the learned model stored in the third learned data storage unit 813. The quality determination unit 824 determines a quality of text information including a title of a video posted by the talent-type person and characters embedded in the video by using the learned model stored in the third learned data storage unit 813. The quality determination unit 824 determines a quality of information on a sound contained in the video posted by the talent-type person by using the learned model stored in the third learned data storage unit 813. The quality determination unit 824 determines a quality of, for example, a frame image constituting the video posted by the talent-type person or an object included in the frame image by using the learned model stored in the third learned data storage unit 813. The quality determination unit 824 determines a quality of an object included in a still image posted by the talent-type person, for example, by using the learned model. The quality determination unit 824 determines whether the talent-type person is likely to become popular.

That is, the quality determination unit 824 determines a popularity level of content including the presence or absence of possibility of becoming popular. In other words, the quality determination unit 824 discovers an artist, a potential, and a talent that are likely to become popular.

The recommendation unit 825 recommends an artist-type, idol-type, or talent-type person who is determined to have a predetermined quality or more to a user. That is, the recommendation unit 825 recommends an artist, an idol, and a talent discovered by the quality determination unit 824 to the user.

The display control unit 826 controls a display unit to display a determination result of the quality determination unit 824 and a person recommended by the recommendation unit 825. The display control unit 826 controls the display unit to display a user interface.

### [3-2. User Interface]

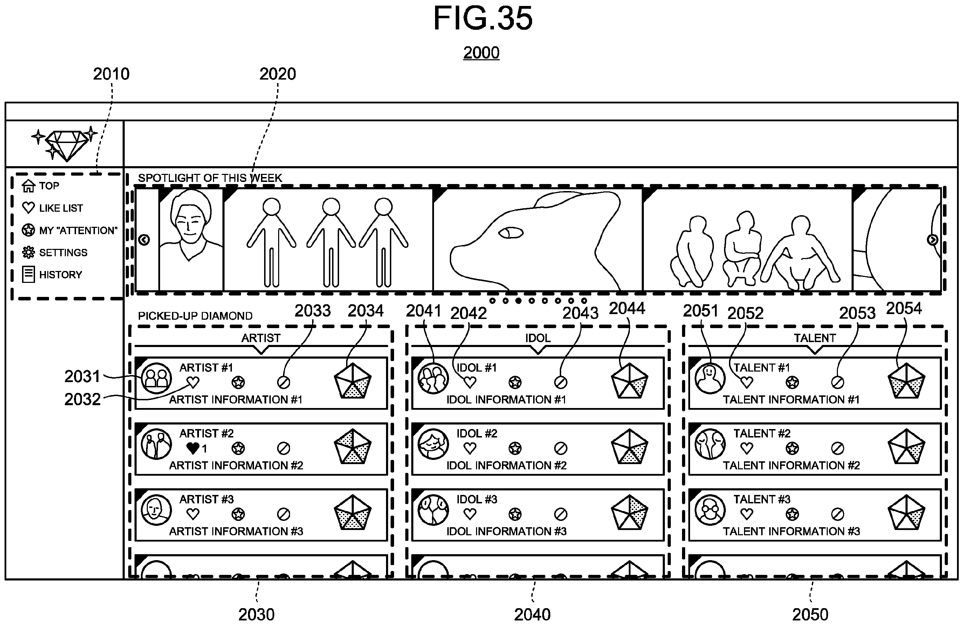

An example of the user interface displayed on the display unit by the discovery device 800 according to the present embodiment will be described with reference to FIG. 35. FIG. 35 is a schematic view illustrating an example of the user interface.

A user interface 2000 illustrated in FIG. 35 is, for example, an interface displayed on the display unit when a user uses the discovery device 800.

The user interface 2000 includes a selection area 2010, a spotlight display area 2020, an artist display area 2030, an idol display area 2040, and a talent display area 2050. The user interface 2000 illustrated in FIG. 35 is a top screen.

The selection area 2010 includes a "top" button, a "like list" button, a "my "attention"" button, a "settings" button, and a "history" button.

If the "top" button is selected, the screen shifts to the top screen. If the "like list" button is selected, the screen shifts to a like list screen in which a person who has been liked by a user himself/herself and a person who has been liked by a person of a project to which the user belongs are displayed. If the "my "attention"" button is selected, the screen shifts to an attention list screen in which a person that the user is paying attention to is displayed. If the "settings" button is selected, the screen shifts to a screen for changing a display area of an interface. If the "history" button is selected, the screen shifts to a screen that displays the history including activity history of a selected person. The screen for displaying the person who has been liked by the person of the project to which the user belongs, the screen for displaying the person that the user is paying attention to, and the screen for displaying the history including the activity history of the selected person will be described later.

In the spotlight display area 2020, artist-type, idol-type, and talents-type people who are attracting attention this week are displayed. There is no particular limit to the number of people displayed in the spotlight display area 2020.

The artist display area 2030 is an area for displaying a discovered artist. Information on the discovered artist is displayed in the artist display area 2030. For example, Artist #1 includes Artist information #1, profile image 2031, a like button 2032, a hide button 2033, and attribute information 2034. Artist information #1 indicates simple information such as a profile of Artist #1. The profile image 2031 indicate a profile image of Artist #1. When the profile image 2031 is pressed, a page illustrating information of Artist #1 is displayed. If the like button 2032 is pressed, Artist #1 can be added to a like list. If the hide button 2033 is selected, Artist #1 is hidden in the user interface 200. If the "my "attention"" button is pressed, the artist can be added to an attention list. The attribute information 2034 includes, for example, items such as "motivation", "this season", "soaring", "hit level", and "popularity level". In the attribute information 2034, the evaluation for each item is illustrated in stages (for example, three stages). For example, a higher evaluation is indicated with a darker color in the attribute information 2034.

The idol display area 2040 is an area for displaying a discovered idol. information on the discovered idol is displayed in the idol display area 2040. For example, Idol #1 includes Idol information #1, a profile image 2041, a like button 2042, a hide button 2043, and attribute information 2044. Idol information #1, the profile image 2041, the like button 2042, the hide button 2043, and the attribute information 2044 are similar to Artist information #1, the profile image 2031, the like button 2032, the hide button 2033, and the attribute information 2034, respectively, and thus, the description thereof will be omitted.

The talent display area 2050 is an area for displaying a discovered talent. Information on the discovered talent is displayed in the talent display area 2050. For example, Talent #1 includes Talent information #1, a profile image 2051, a like button 2052, a hide button 2053, and attribute information 2054. Talent information #1, the profile image 2051, the like button 2052, the hide button 2053, and the attribute information 2054 are similar to Artist information #1, the profile image 2031, the like button 2032, the hide button 2033, and the attribute information 2034, respectively, and thus, the description thereof will be omitted.

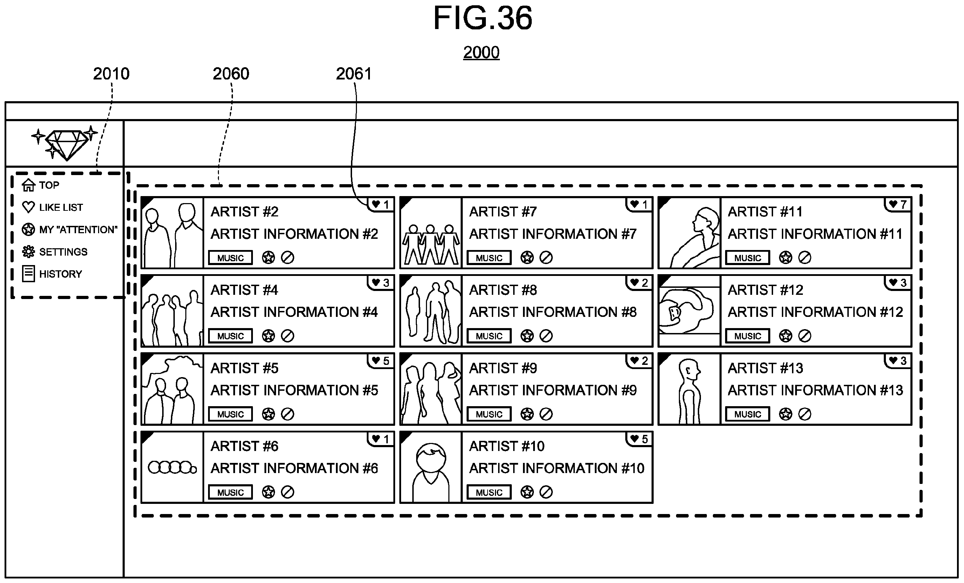

A description will be given with reference to FIG. 36 regarding a like list of artists for whom the like button 2032 has been selected by a user and members of a project. FIG. 36 is a view for describing the like list of artists. Note that a like list of idols and a like list of talents are similar to the like list of artists, and thus, the description thereof will be omitted.

As illustrated in FIG. 36, a like list 2060 illustrates artists for whom a user and members of a project to which the user belongs have selected the like button 2032. The like list 2060 includes number-of-likes information 2061 which indicates the number of people who have selected the like button 2032 for an artist. For example, it is illustrated that Artist #2 is liked by one person, and Artist #4 is liked by three people. That is, the user can easily grasp how many people like an artist by referring to the like list 2060.

Further, the user can cancel the like for the artist by pressing a button of the number-of-likes information 2061 with a mouse or the like in the like list 2060. In this case, if no member of the project to which the user belongs likes an artist, the artist disappears from the like list 2060.

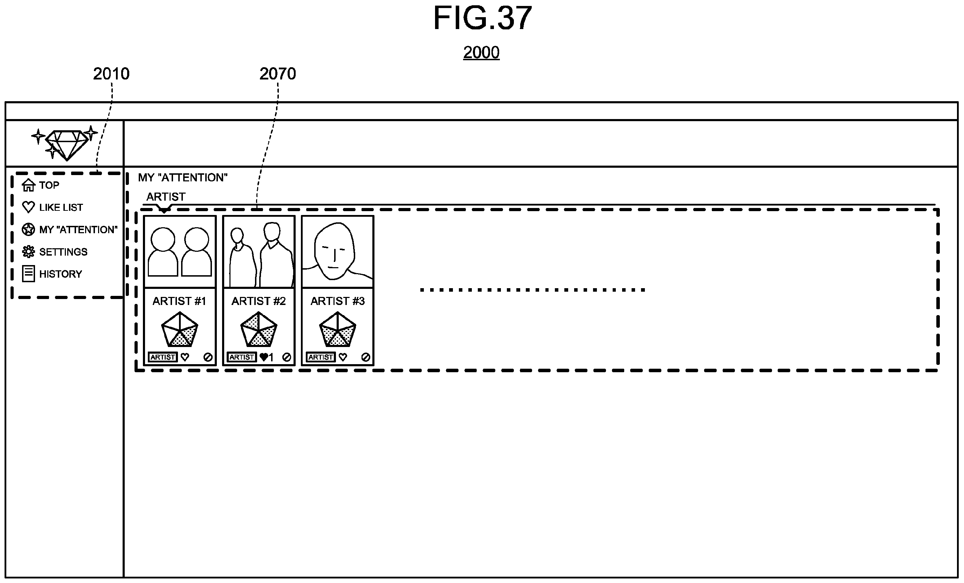

An attention list will be described with reference to FIG. 37. FIG. 37 is a schematic view for describing the attention list. Note that an attention list of idols and an attention list of talents are similar to an attention list of artists, and thus, the description thereof will be omitted.

As illustrated in FIG. 37, artists that a user is paying attention to are displayed in an attention list 2070. For example, the attention list 2070 illustrates Artist #1, Artist #2, Artist #3, and the like as the artists that the user is paying attention to. That is, the attention list 2070 can aggregate the artists that the user is paying attention to.

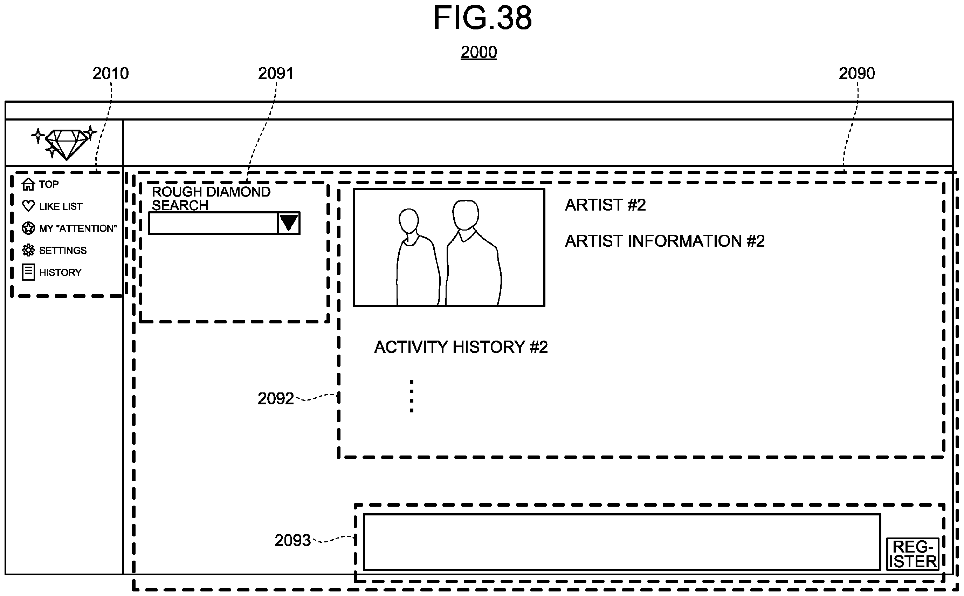

A screen for displaying artist history will be described with reference to FIG. 38. FIG. 38 is a view for describing the screen for displaying the artist history. Note that a screen for displaying idol history and a screen for displaying talent history are similar to the screen for displaying the artist history, and thus, the description thereof will be omitted.

As illustrated in FIG. 38, a history screen 2090 has a rough diamond search area 2091, a history display area 2092, and a history input area 2093.

The rough diamond search area 2091 is an area for searching an artist name for which history is displayed in the history display area 2092. For example, a user can display the artist history in the history display area 2092 by inputting a desired artist name in an input button included in the rough diamond search area 2091.

In the history display area 2092, the artist history is displayed. The history display area 2092 includes Artist #2, Artist information #2, and Activity history #2. The artist name is actually displayed in Artist #2. Artist information #2 displays basic information including the artist's birthplace or members and the like in the case of a band. Information indicating the activity history such as a live show is actually displayed in Activity history #2. That is, the user can easily grasp the artist history by referring to the history screen 2090.

The history input area 2093 is an area for inputting the artist history. The user can update the information in the history display area 2092 by inputting the history in the history input area 2093 and pressing a registration button.

### [3-3. Analysis Device]

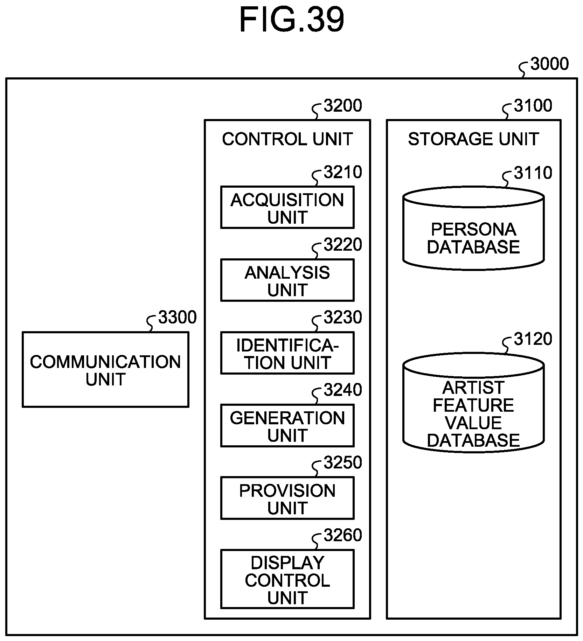

An analysis device according to still another embodiment of the present disclosure will be described with reference to FIG. 39. FIG. 39 is a block diagram illustrating a configuration of the analysis device according to still another embodiment of the present disclosure.

As described above, the discovery device 800 can discover an artist, an idol, and a talent who are likely to become popular. An analysis device 3000 illustrated in FIG. 39 calculates commercial values of the artist, idol, and talent discovered by the discovery device 800. The analysis device 3000 analyzes fan bases and potential fan bases of the artist, idol, and talent discovered by the discovery device 800. The analysis device 3000 generates persona images of fans of the artist, idol, and talent discovered by discovery device 800.

As illustrated in FIG. 39, the analysis device 3000 includes a storage unit 3100, a control unit 3200, and a communication unit 3300.

The storage unit 3100 stores various types of information. The storage unit 3100 stores, for example, a program for realizing each unit of the analysis device 3000. In this case, the control unit 3200 realizes a function of each unit by expanding and executing the program stored in the storage unit 3100. The storage unit 810 can be realized by, for example, a semiconductor memory element such as a RAM, a ROM, and a flash memory, or a storage device such as a hard disk, a solid state drive, and an optical disk. The storage unit 3100 may be an external storage device connected to the analysis device 3000 in a wired or wireless manner via the communication unit 3300. In this case, the communication unit 3300 is connected to a network such as an Internet network. The storage unit 3100 has, for example, a persona database 3110 and an artist feature value database 3120.

The persona database 3110 stores a learned model generated based on questionnaire results. The persona database 3110 stores, for example, the learned model generated based on the questionnaire on music tastes conducted on more than tens of thousands of people. The persona database 3110 stores the learned model that receives an input of information on a feature value of an artist and outputs information on an assumable fan base of the artist. The feature value of the artist includes various types of information on the artist. The feature value of the artist includes information on a sound source, visuals about the artist, and various types of other offline information.

The artist feature value database 3120 stores information on various analysis results of the feature value of the artist. Examples of the feature value of the artist include ten pieces of musicality information, music genre information, lyrics information, vocal type information, visual information, reputation information, profile information, live show customer attraction information, musical score information, and newness information.

Hereinafter, a description will be given regarding the musicality information, the music genre information, the lyrics information, the vocal type information, the visual information, the reputation information, the profile information, the live show customer attraction information, the musical score information, and the newness which are used as the feature values of artists in the present disclosure.

The musicality information means an impression of a song. The musicality information is an adjective that expresses the impression of the song. Examples of the adjective include "high tension", "glamorous", "sexy", and "sorrowful", but are not limited thereto. Specifically, the adjective is selected from 62 predetermined adjectives. The 62 adjectives are defined based on results of the questionnaire on music tastes conducted on more than tens of thousands of people. The artist feature value database 3120 stores a learned model that receives an input of musicality, such as a rhythm, a tempo, and a beat of a song, and outputs the adjective. Such a learned model is generated based on the questionnaire results. The rhythm, tempo, beat, and the like of the song are analyzed by a 12-sound analysis technique using a song characteristic analysis tool based on a data file of the song.

The music genre information means information such as a song genre, an artist type, an age, a country, and the song genre means information such as pop and rock. The artist type means information such as male, female, mixed, solo, duo, and a group.

The lyrics information means an impression of lyrics classified based on a feature value of the lyrics. The impression of the lyrics is expressed in genres such as family, romance, and youth. The artist feature value database 3120 stores a learned model that receives an input of data of lyrics and outputs information on a genre of the lyrics. Such a learned model is generated based on a dictionary of a feature value of a phrase created by performing morphological analysis on the lyrics.

The vocal type information means a vocal type of an artist who sings a song. The artist feature value database 3120 stores a learned model that outputs information on a vocal type when data of a vocal sound source extracted by using a sound source separation technique is input for the song. The vocal type is defined based on a vocal feature value obtained according to an analysis result of frequency analysis executed for the vocal sound source. The vocal feature value includes information such as a voice pitch, a voice range, and voice quality. The learned model that outputs information on the vocal type is generated based on the vocal feature value.

The visual information means an impression such as a photograph of an artist or a photograph of a jacket of a song of the artist. The visual information is an adjective that expresses the impression of the photograph of the artist or the photograph of the jacket. Examples of the adjective include "clean", "cute", "masculine", and "flashy" but are not limited thereto. Specifically, the adjective is selected from 22 predetermined adjectives. The 22 adjectives are defined based on results of a questionnaire on tastes of each artist's photo and a jacket photo of each artist's song which has been conducted on more than tens of thousands of people. The artist feature value database 3120 stores a learned model that outputs an adjective when a photograph of an artist or a photograph of a jacket of a song of the artist is input. Such a learned model is generated based on results of the questionnaire.

The reputation information means a reputation tendency of an artist. The reputation tendency of the artist means information on the number of searches with a search engine or the like, the number of articles on SNS or news sites, and contents of the articles. The number of articles and the contents of the articles include information on coverage rates of the articles, awards, and exposure levels. The artist feature value database 3120 stores a learned model that outputs information on a buzzing level, an attention level, and a settled level when information on the number of searches for an artist with a search engine and the like is input. The artist feature value database 3120 stores a learned model that outputs information on a fashionability level of the artist when information on the number of searches, the number of articles, and the contents of the articles is input.

The profile information means information on a tie-up of a song or information on characteristics of people involved in the song. The information on the tie-up of the song is information on an animation, a movie, a TV program, and the like in which the song is used. The information on the tie-up is obtained from a music news site or the like. The information on the characteristics of the people involved in the song is information on a lyricist, a composer, an arranger, or the like of the song. Specifically, it is the information indicating how many popular pieces of music have been produced by the lyricist, composer, and arranger of the song. The information on the characteristics of the people involved in the music is obtained from a music chart site or the like. The artist feature value database 3120 stores a learned model that outputs information indicating popularity levels of input lyricist, composer, and arranger when information, such as names of the lyricist, composer, and arranger, is input.

The live show customer attraction information means live show information and venue information. The live show information includes information such as a date when a live show is performed and a venue name. The live show information includes information on either a single show or a festival, and information on a guest artist and a co-star of a joint performance or the like. The live show information may include information on a dinner show. The live show information is obtained from a site that handle information on live shows. The venue information includes information on a venue name, a region, and the number of customers. The venue information is obtained from a venue site and the like. The artist feature value database 3120 stores a learned model that outputs a value of a music event when the live show information or venue information is input.

The musical score information means musical score information regarding a musical score of a song of an artist and information regarding the number of searches for the musical score. The musical score information includes information on a type of the musical score and the price of the musical score. The score information is obtained from a site that provides musical score data, a site that sells a musical score, and the like. The information regarding the number of searches for the musical score means the number of searches for the musical score of the artist with a search engine or the like. The artist feature value database 3120 stores a learned model that outputs information on a value of the musical score when the musical score information and the information on the number of searches for the musical score are input.

The newness information means the newness of musicality information, music genre information, lyrics information, vocal type information, visual information, reputation information, profile information, live show customer attraction information, and musical score information. The newness information means the newness of a combination of two or more items among the musicality information, the music genre information, the lyrics information, the vocal type information, the visual information, the reputation information, the profile information, the live show customer attraction information, and the musical score information. The artist feature value database 3120 stores a learned model that outputs information on the newness of an artist when the musicality information, the music genre information, the lyrics information, the vocal type information, the visual information, the reputation information, the profile information, the live show customer attraction information, and the musical score information of the artist are input.

The control unit 3200 includes an acquisition unit 3210, an analysis unit 3220, an identification unit 3230, a generation unit 3240, a provision unit 3250, and a display control unit 3260. The control unit 3200 is realized by, for example, a CPU, an MPU, or the like executing a program stored in a storage unit (not illustrated) using a RAM or the like as a work area. Further, the control unit 3200 is a controller, and may be realized by an integrated circuit such as an ASIC and an FPGA.

The acquisition unit 3210 acquires information on various types of content. The acquisition unit 3210 acquires information on an artist that needs to be analyzed. The acquisition unit 3210 acquires information on a feature value of the artist that needs to be analyzed. The acquisition unit 3210 acquires musicality information, music genre information, lyrics information, vocal type information, visual information, reputation information, profile information, live show customer attraction information, musical score information, and the like of the artist.

The analysis unit 3220 analyzes the artist based on the feature values of the artist acquired by the acquisition unit 3210. The analysis unit 3220 analyzes the artist using various learned models stored in the artist feature value database 3120 based on the feature values of the artist acquired by the acquisition unit 3210.

The identification unit 3230 identifies various types of information based on an analysis result of the analysis unit 3220. The identification unit 3230 identifies a fan base and a potential fan base of the artist based on the analysis result of the analysis unit 3220. As will be described later, the fan base is selectively identified from among nine predetermined fan bases. In other words, the identification unit 3230 classifies fan bases and potential fan bases of artists into nine types. The identification unit 3230 identifies a type of a fan base and a potential fan base from among the nine predetermined types, regardless of a user's emotion type.

The generation unit 3240 generates a persona image of a fan of an artist based on an analysis result of the analysis unit 3220. The generation unit 3240 generates the persona image using the learned model stored in the persona database 3110 based on the analysis result of the analysis unit 3220.

The provision unit 3250 provides various types of information to a user. The provision unit 3250 provides the user with an identification result of the fan base and the potential fan base obtained by the identification unit 3230, and the generation result of the persona image obtained by the generation unit 3240.

The display control unit 3260 controls a display unit to display the identification result of the identification unit 3230 and the generation result of the generation unit 3240. The display control unit 3260 controls the display unit to display a user interface.

### [3-4. User Interface]

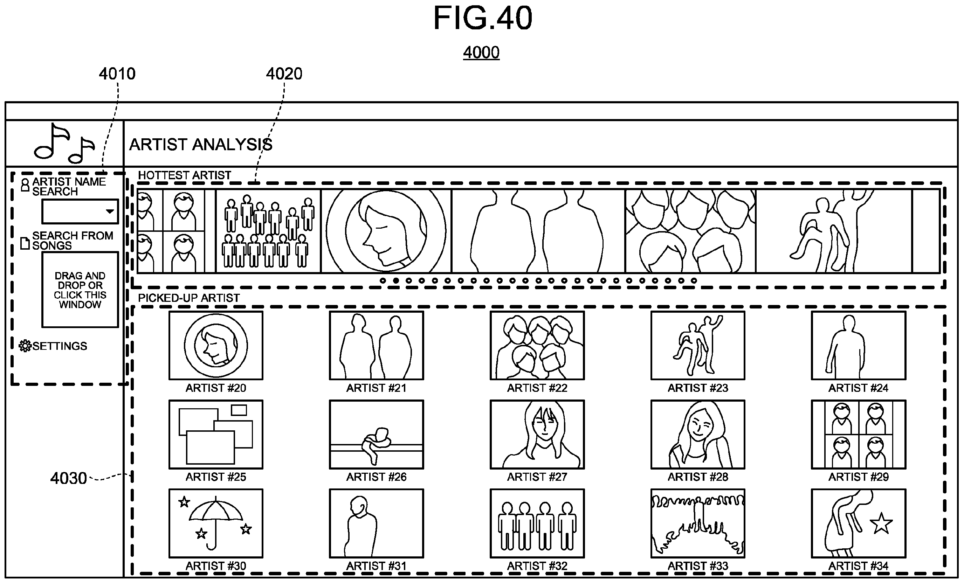

An example of the user interface displayed on the display unit by the analysis device 3000 will be described with reference to FIG. 40. FIG. 40 is a schematic view illustrating an example of the user interface.

The user interface 400 includes a search display area 4010, a hottest artist display area 4020, and a picked-up artist display area 4030.

The search display area 4010 is an area for inputting an artist to be analyzed. For example, when a down arrow button for searching for an artist name in the search display area 4010 is pressed with a mouse or the like, the artist name is displayed, and thus, it is sufficient for a user to select an artist that is desirably analyzed. The user may directly input an artist name in an artist name search field. For example, when a search box for songs in the search display area 4010 is pressed with a mouse or the like, a screen for selecting a song is displayed, and thus, it is sufficient for the user to select a song that is desirably analyzed. When the user selects an artist or a song to be analyzed, the screen shifts to an analysis screen of the artist.

The hottest artist display area 4020 is an area in which hottest artists are displayed. In the hottest artist display area 4020, for example, artists searched more than a predetermined number of times within a predetermined period are displayed.

The picked-up artist display area 4030 is an area in which picked-up artists are displayed. In the picked-up artist display area 4030, for example, an artist with the highest sales, an artist who has recently released a song, and the like are displayed. In the example illustrated in FIG. 40, Artists #20 to #34 are displayed. The user can also shift to the analysis screen of the selected artist by pressing a packaged photo of Artists #20 to #34 in the picked-up artist display area 4030 with a mouse or the like.

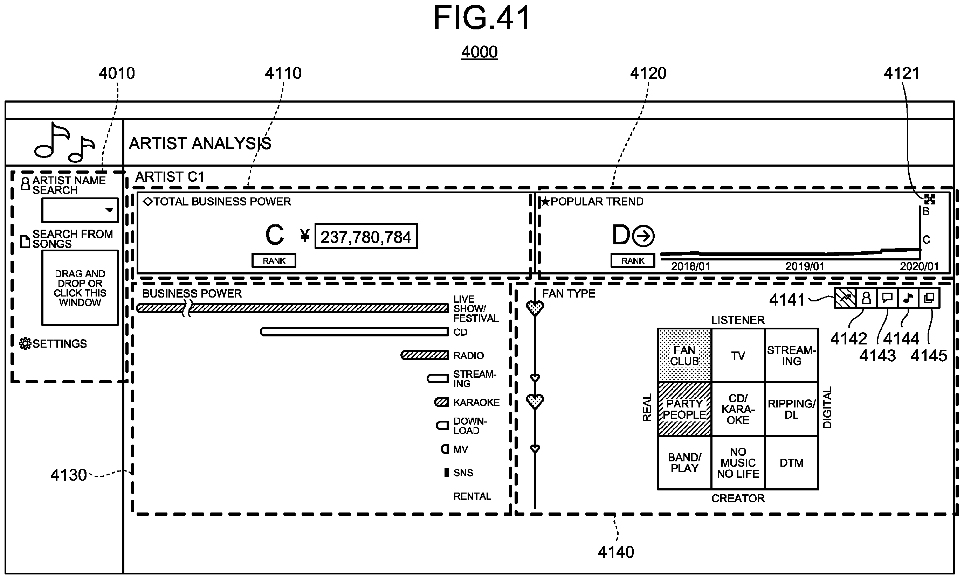

An artist analysis screen according to the present embodiment will be described with reference to FIG. 41. FIG. 41 is a schematic view illustrating an example of the artist analysis screen.

As illustrated in FIG. 41, the artist analysis screen includes a total business power display area 4110, a popular trend display area 4120, a business power display area 4130, and a fan type display area 4140. FIG. 41 illustrates an analysis screen of Artist C1.

In the total business power display area 4110, total business power of Artist C1 is displayed. In the present embodiment, the total business power is an index expressing a commercial value by price and a rank. The price that represents the degree of expecting performance within a predetermined period in the amount, and is different from the actual amount of Artist C1. The price may be expressed in points. In the total business power display area 4110, it is illustrated that the rank of Artist C1 is "C" and the price is "¥237,780,784". It is possible to confirm artists belonging to the respective ranks and amounts thereof by pressing a RANK button in the total business power display area 4110 with a mouse and the like.

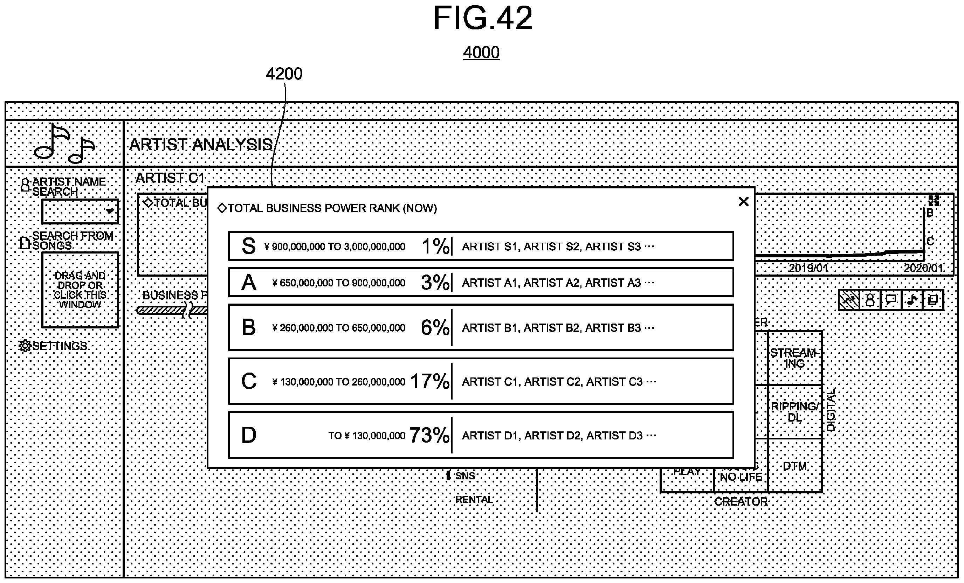

The rank of the total business power of the artist will be described with reference to FIG. 42. FIG. 42 is a view for describing the rank of the total business power of the artist.

FIG. 42 illustrates a rank table 4200. As illustrated in the rank table 4200, ranks are divided into five stages of "S", "A", "B", "C", and "D". Each artist belongs to each rank. Artists S1 to S3 belong to the rank "S". Artists A1 to A3 belong to the rank "A". Artists B1 to B3 belong to the rank "B". Artists C1 to C3 belong to the rank "C". Artists D1 to D3 belong to the rank "D". Ranks are divided according to the amounts of artists. An artist between "¥900,000,000" and "¥3,000,000,000" is classified into the rank "S". An artist between "¥650,000,000" and "¥900,000,000" is classified into the rank "A". An artist between "¥260,000,000" and "¥650,000,000" is classified into the rank "B". An artist between "¥130,000,000" and "¥260,000,000" is classified into the rank "C". An artist with "¥130,000,000" or less is classified into the rank "D". Artists belonging to the rank "S" account for 1% of the total. Artists belonging to the rank "A" account for 3% of the total. Artists belonging to the rank "B" account for 6% of the total. Artists belonging to the rank "C" account for 17% of the total. Artists belonging to the rank "D" account for 73% of the total.

In the popular trend display area 4120, the trend power of Artist C1 is displayed. In the present embodiment, the trend power is defined based on information on a stature level and information indicating whether to be searched. In the popular trend display area 4120, it is illustrated that the trend power of Artist C1 is "D". That is, the rank of the total business power may differ from the rank of the trend power. It is possible to confirm artists belonging to each rank by selecting a RANK button in the popular trend display area 4120.

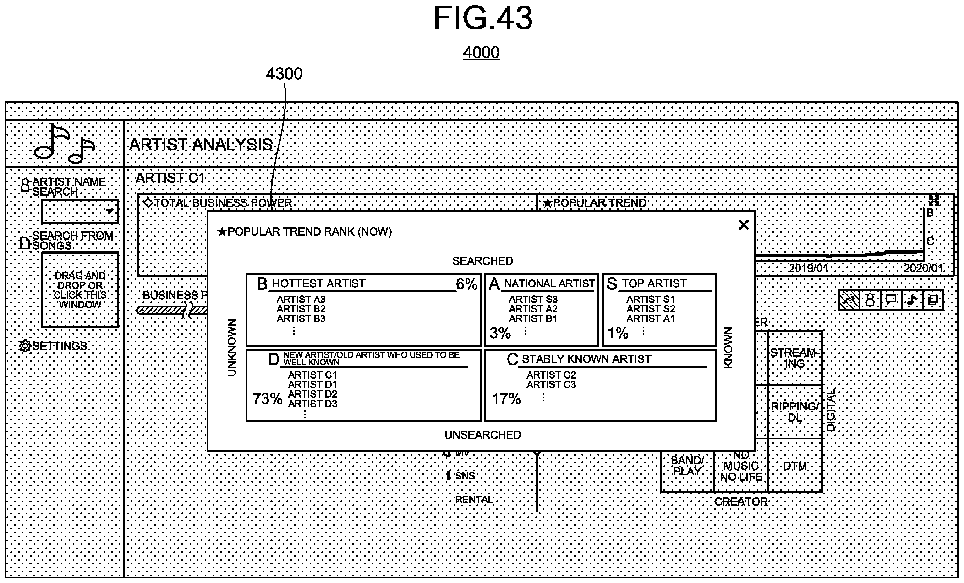

The rank of the trend power of the artist will be described with reference to FIG. 43. FIG. 43 is a view for describing the rank of the trend power of the artist.

FIG. 43 illustrates a rank table 4300. As illustrated in the rank table 4300, ranks are divided into five stages: "S", "A", "B", "C", and "D". In the rank table 4300, the horizontal axis represents the information on the stature level, and the vertical axis represents the information on whether to be searched. Artists who are well-known and searched well belong to the rank "S". Artists who are relatively known and searched well belong to the rank "A". Artists who are relatively unknown but searched well belong to the rank "B". Artists who are relatively known and are relatively unsearched belong to the rank "C". Artists who are relatively unknown and are relatively unsearched belong to the rank "D".

It is possible to confirm a settled level and a buzzing level calculated from the number of searches of Artist C1 by selecting a zoom-in icon 4121 in the popular trend display area 4120.

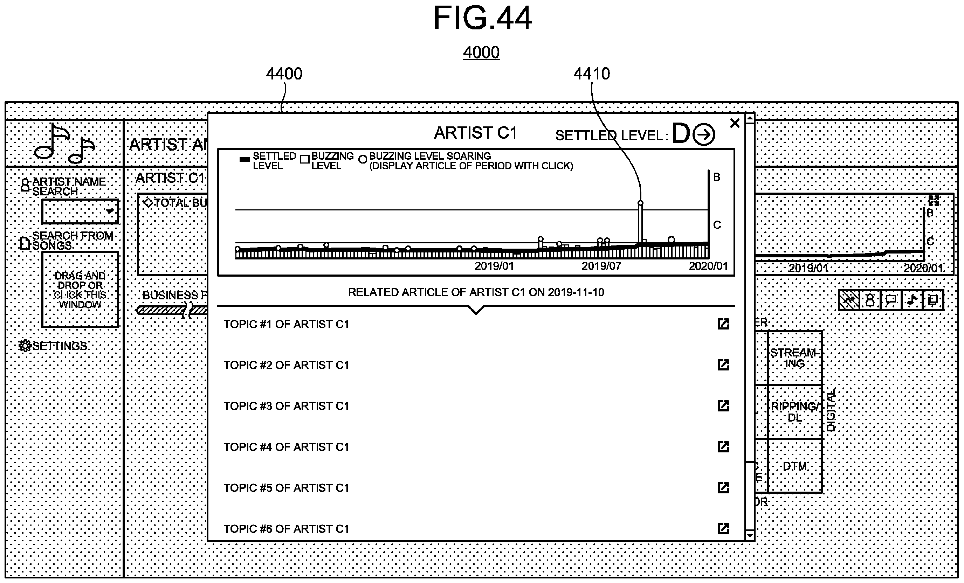

A method of confirming the settled level and the buzzing level will be described with reference to FIG. 44. FIG. 44 is a view for describing the method of confirming the settled level and the buzzing level.

FIG. 44 illustrates settled level information 4400. In the upper part of the settled level information 4400, the settled level and the buzzing level are illustrated in a graph. In the graph, the horizontal axis is a date and the vertical axis is the settled level. The settled level means the degree of being searched. The graph illustrates a day when the buzzing level has soared with a point. Since the graph illustrates the movement of the settled level, a user can easily grasp how much Artist C1 has become settled after the buzzing level soared by referring to the graph. An article related to Artist C1 is displayed in the lower part of the settled level information 4400. In the settled level information 4400, two articles whose buzzing level has recently soared are displayed. In the settled level information 4400, Topics #1 to #6 of Artist C1 are displayed as related articles of Artist C1 as of November 10, 2019. The graph of the settled level information 4400 includes a buzzing level soaring day 4410. When the settled level information 4400 is referred to, it is illustrated that the settled level of Artist C1 has improved since the buzzing level soaring day 4410. It is possible to confirm the article of Artist C1 on the day when the buzzing level has soared by pressing the buzzing level soaring day 4410 with a mouse or the like.

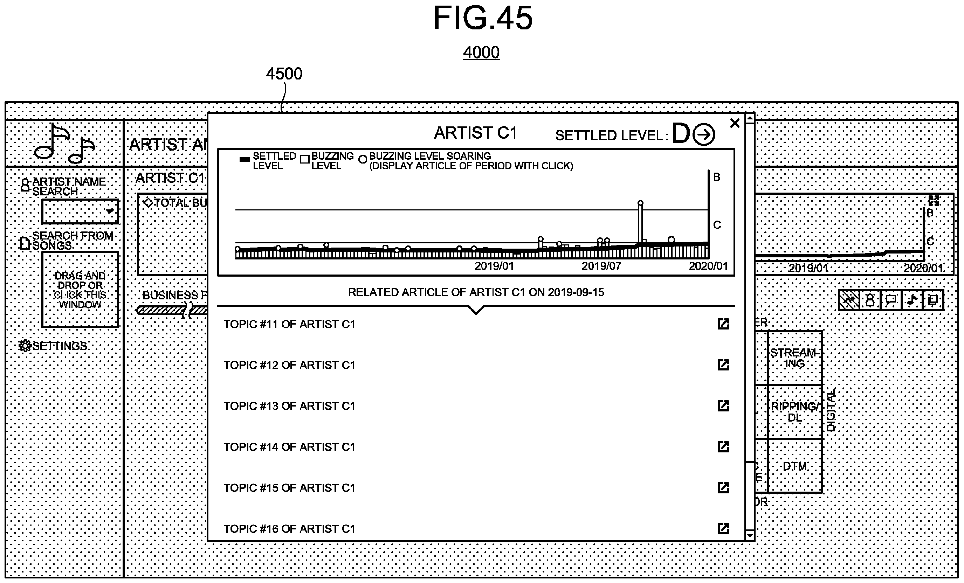

FIG. 45 illustrates settled level information 4500 of Artist C1 on the day when the buzzing level has soared. In the settled level information 4500, Topics #11 to #16 of Artist C1 are displayed as related articles of Artist C1 on September 15, 2019 when the buzzing level soared. A user can understand a reason why the buzzing level of Artist C1 soared by confirming the settled level information 4500.

The business power display area 4130 illustrates a medium to determine a product value of an artist. The business power display area 4130 includes items such as "live show/festival", "CD", "radio", "streaming", "karaoke", "download", "MV", "SNS", and "rental". "Live show/festival" indicates the amount of a product value of Artist C1 at a live show or festival. "CD" indicates the amount of a product value of Artist C1 in the sales of CD. "Radio" indicates the amount of a product value of Artist C1 on the radio. "Streaming" indicates the amount of a product value of Artist C1 in the video distribution service or the like. "Karaoke" indicates the amount of a product value of Artist C1 in karaoke. "Download" indicates the amount of a product value of Artist C1 in the download service. "MV" indicates the amount of a product value of Artist C1 in a music video. "SNS" indicates the amount of a product value of Artist C1 on SNS. "Rental" indicates the amount of a product value of Artist C1 in rental of CDs or the like. A total value of the amounts of the respective items included in the business power display area 4130 is the amount displayed in the total business power display area 4110. A user can easily grasp the distribution of the amounts of the product values for the respective items of Artist C1 by confirming the business power display area 4130. For example, the user can grasp that the amount of the product value of "live show/festival" is the largest and the amount of the product value of "rental" is the smallest for Artist C1. For Artist C1, graphs of "live show/festival", "radio" and "karaoke" are illustrated in a different color from the other items, which mean that the three items of "live show/festival", "radio" and "karaoke" are media for which Artist C1 has particular strength as compared with the average of all the artists.

In the fan type display area 4140, a fan type of an artist is displayed. In the present embodiment, fan types are classified into nine types. The nine types are "fan club", "TV", "streaming", "party people", "CD/karaoke", "ripping/DL", "band/play", "NO MUSIC NO LIFE", and "DTM". The name of the fan type does not limit the present disclosure. As illustrated in the fan type display area 4140, each one fan type is arranged in each area obtained by dividing a square into nine areas. In this case, it means that a type arranged on the right side tends to be "digital", and a type arranged on the left side tends to be "real". Specifically, it means that the more "digital" tends to do activities related to songs of artists at home, and the more "real" tends to do activities related to songs of artists at a venue such as a live show. Further. it also means that a type arranged on the upper side tends to be a "listener", and a type arranged on the lower side tends to be a "creator". Specifically, it means that the "listener" tends to be specialized in listening to songs, and the "creator" tends to play songs by himself/herself. In the fan type display area 4140, a main fan base of Artist C1 and a potential fan base are colored and displayed in different colors. In the example illustrated in FIG. 41, the main fan base is "party people" and the potential fan base is "fan club".

The fan type display area 4140 includes a trend display button 4141, a persona display button 4142, a source display button 4143, a favorite artist display button 4144, and a playlist display button 4145. The trend display button 4141 is a button for displaying the popular trend display area 4120.

The persona display button 4142 is a button for displaying a persona image of a fan type selected in the fan type display area 4140. The fan type for displaying the persona image can be selected by pressing the fan type displayed in the fan type display area 4140 with a mouse or the like.

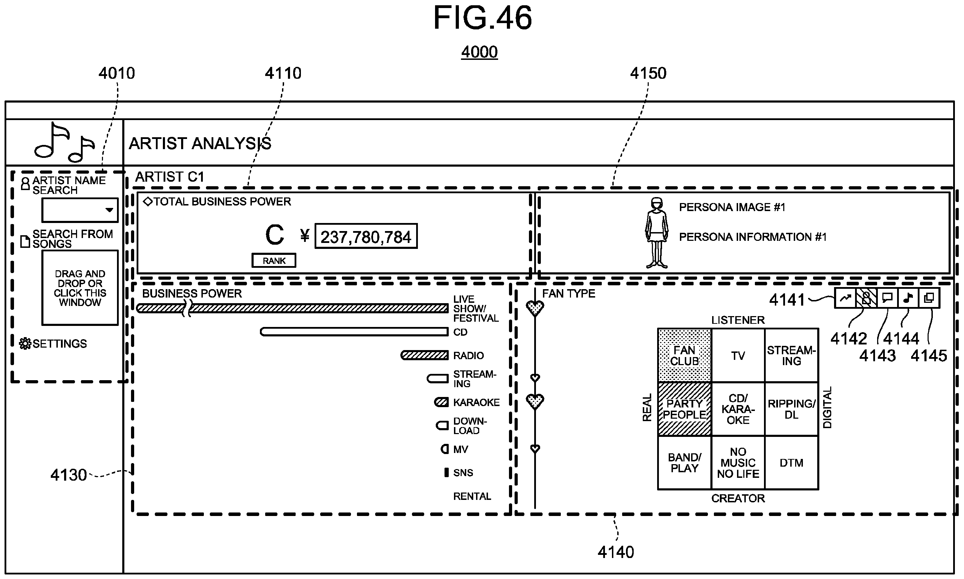

A method of displaying the persona image will be described with reference to FIG. 46. FIG. 46 is a view for describing the method of displaying the persona image.

As illustrated in FIG. 46, the persona image is displayed in a persona display area 4150 if the persona display button 4142 is pressed. In the example illustrated in FIG. 46, a persona image of "party people" is displayed in the persona display area 4150 since "party people" is selected as the fan type. Specifically, Persona image #1 and Persona information #1 are displayed in the persona display area 4150. Persona image #1 displays a name, an occupation, an age, and a gender of an assumed persona image. In Persona information #1, information including how to interact with a song of the assumed persona image is displayed. Further, in the fan type display area 4140, information indicating any medium through which the persona image of "party people" consumes songs is indicated by a heart symbol. In the example illustrated in FIG. 46, "live show/festival", "karaoke", "streaming", and "MV" are attached with the heart symbol. This means that the persona image of "party people" tends to consume songs at "live show/festival", "karaoke", "streaming", and "MV". Here, a big heart symbol is attached to the items of "live show/festival" and "karaoke". This means that the medium which is the strength of Artist C1 as a target matches the medium through which "party people" consumes songs.

The persona image displayed in the persona display area 4150 can be changed by selecting another fan type displayed in the fan type display area 4140 in a state where the persona display button 4142 is displayed.

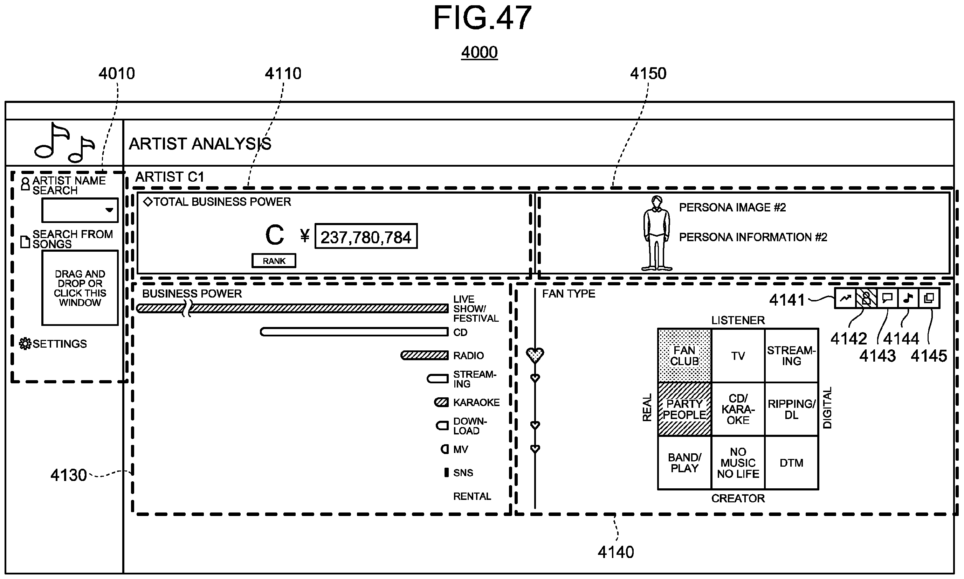

A method of changing the displayed persona image will be described with reference to FIG. 47. FIG. 47 is a view for describing the method of changing the persona image to be displayed.

In the example illustrated in FIG. 47, "streaming" is selected as the fan type. In this case, Persona image #1 and Persona information #2 are displayed as the persona image of "streaming" in the persona display area 4150. Further, it is possible to confirm any medium through which the persona image of "streaming" consumes songs by changing the fan type. In the example illustrated in FIG. 47, the persona image of "streaming" illustrates that songs are consumed by "radio", "streaming", "downloading", and "MV". Further, it is illustrated that a matching point between a medium through which the persona image of "streaming" consumes songs and a medium which is the strength of Artist C1 is "radio".

In the example illustrated in FIG. 46, an information source from which the fan base of "party people" obtains music-related information can be displayed if the source display button 4143 is pressed.

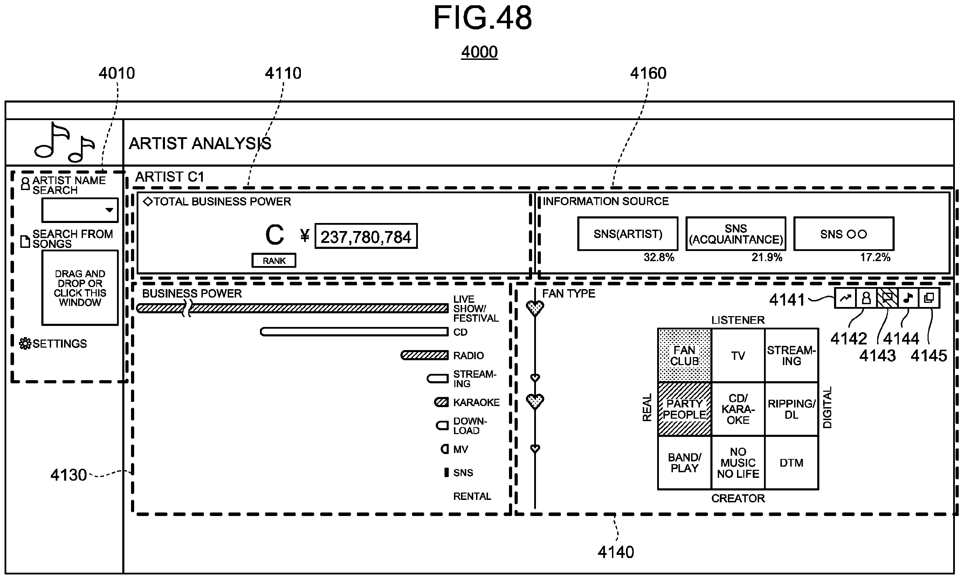

A method of displaying an information source from which a fan base obtains information will be described with reference to FIG. 48. FIG. 48 is a view for describing the method of displaying the information source from which the fan base obtains information.

As illustrated in FIG. 48, an information source display area 4160 displays the information source from which the fan base of "party people" obtains information. In the information source display area 4160, for example, the top three information sources are displayed. For example, in the information source display area 4160, it is illustrated that SNS of artists is 32.8%, SNS of acquaintances is 21.9%, and the other SNS is 17.2%. In FIG. 48, when a fan type in the fan type display area 4140 is selected, an information source of the selected fan type is displayed in the information source display area 4160. As a result, a user can easily grasp the information source for each fan type.

In the example illustrated in FIG. 46, when the favorite artist display button 4144 is pressed, information indicating what kind of artist the fan base of "party people" prefers other than Artist C1 can be displayed.

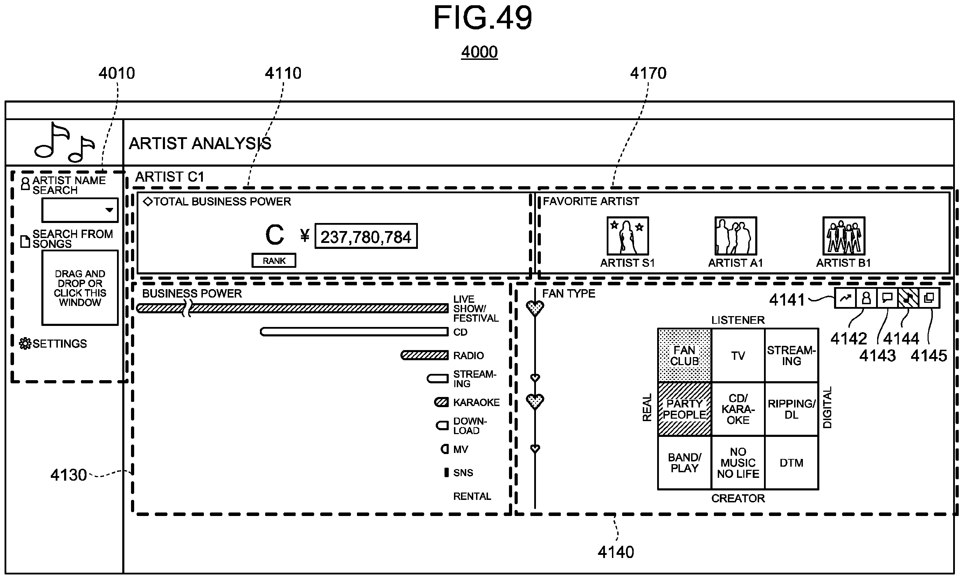

A method of displaying an artist preferred by a fan base will be described with reference to FIG. 49. FIG. 49 is a view for describing the method of displaying the artist preferred by the fan base.

As illustrated in FIG. 49, artists preferred by the fan base of "party people" other than Artist C1 are displayed in an artist display area 4170. In the artist display area 4170, for example, three sets of artists other than Artist C1 are displayed. Specifically, Artist S1, Artist A1, and Artist B1 are displayed in the artist display area 4170. In FIG. 49, when a fan type in the fan type display area 4140 is selected, artists preferred by the selected fan type are displayed in the artist display area 4170. As a result, a user can easily display the preferred artists other than Artist C1 for each fan type.

In the example illustrated in FIG. 46, if the playlist display button 4145 is pressed, a playlist preferred by the fan base of "party people" can be displayed.

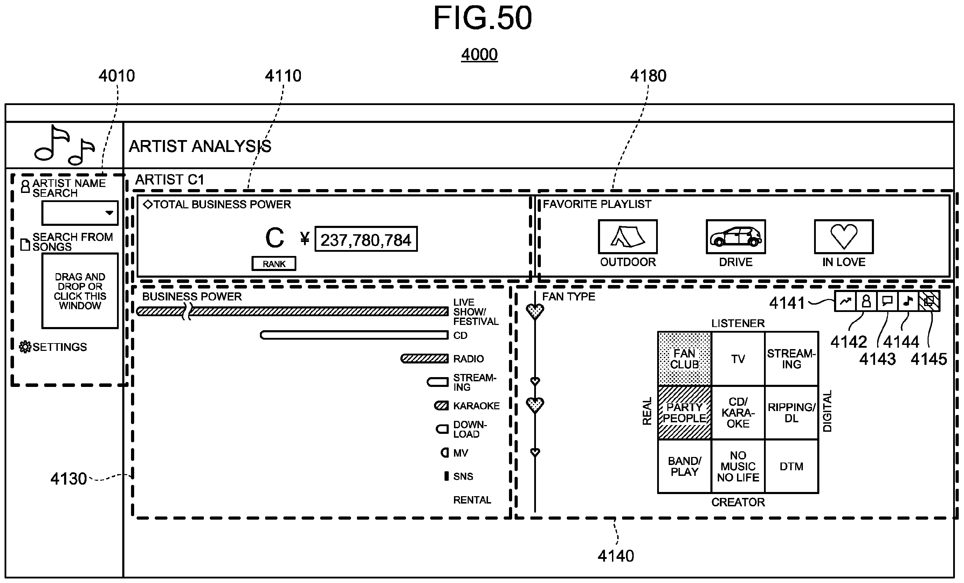

A method of displaying a playlist preferred by a fan base will be described with reference to FIG. 50. FIG. 50 is a view for describing the method of displaying the playlist preferred by the fan base.

As illustrated in FIG. 50, a playlist display area 4180 displays the playlist preferred by the fan base of "party people". Here, the playlist is a playlist that can be shared by users of flat-rate music distribution service or the like. Specifically, "outdoor", "drive", and "in love" are displayed in the playlist display area 4180. In FIG. 50, when a fan type in the fan type display area 4140 is selected, a playlist preferred by the selected fan type is displayed in the artist display area 4170. As a result, a user can easily display the preferred playlist for each fan type.

As described above, the persona image of the assumed fan of the artist is generated in the present embodiment. In the present embodiment, it is possible to display the medium through which music is consumed, the information source from which the information on music is obtained, the preferred artists other than the artist, the preferred playlist, and the like can be displayed for each generated persona image. That is, the present embodiment can automatically provide the user with information necessary to improve the sales of the artist's song. As a result, the user can formulate a measure for improving the sales of the artist's song based on the information generated in the present embodiment.

### (4. Hardware Configuration)

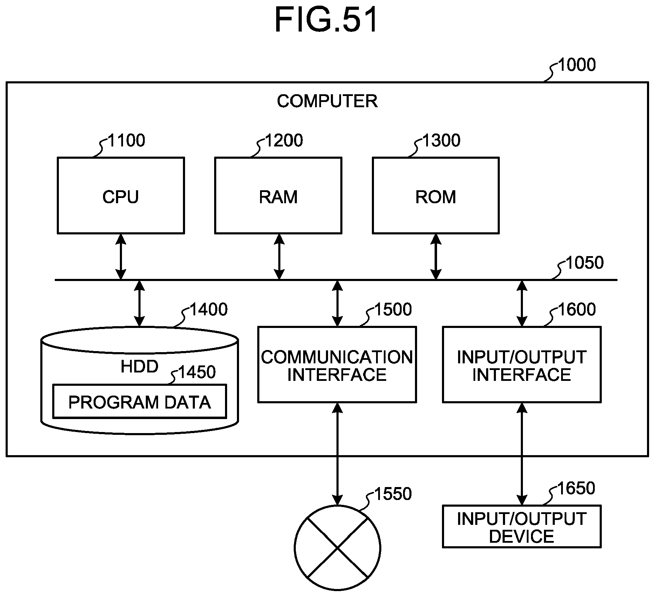

The emotion calculation device 100, the discovery device 800, and the analysis device 3000 according to each of the above-described embodiments are realized by, for example, a computer 1000 having a configuration as illustrated in FIG. 51. FIG. 51 is a hardware configuration diagram illustrating an example of the computer 1000 that realizes the functions of the emotion calculation device 100. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 is operated based on a program stored in the ROM 1300 or the HDD 1400, and controls each unit. For example, the CPU 1100 develops a program stored in the ROM 1300 or the HDD 1400 into the RAM 1200 and executes processes corresponding to various programs.

The ROM 1300 stores a boot program such as a basic input output system (BIOS) executed by the CPU 1100 when the computer 1000 starts up, a program depending on hardware of the computer 1000, and the like.

The HDD 1400 is a computer-readable recording medium that non-temporarily records a program executed by the CPU 1100, data used by the program, and the like. Specifically, the HDD 1400 is a recording medium that records a program and the like according to the present disclosure, which is an example of the program data 1450.

The communication interface 1500 is an interface for connecting the computer 1000 to an external network 1550 (for example, the Internet). For example, the CPU 1100 receives data from other devices or transmits data generated by the CPU 1100 to the other devices via the communication interface 1500.

The input/output interface 1600 is an interface for connecting between an input/output device 1650 and the computer 1000. For example, the CPU 1100 receives data from an input device such as a keyboard or a mouse via the input/output interface 1600. Further, the CPU 1100 transmits data to an output device such as a display, a speaker, or a printer via the input/output interface 1600. Further, the input/output interface 1600 may function as a media interface for reading a program or the like recorded on predetermined recording media. The media are, for example, optical recording media such as a digital versatile disc (DVD) or a phase change rewritable disk (PD), a magneto-optical recording medium such as a magneto-optical disk (MO), a tape medium, a magnetic recording medium, a semiconductor memory, or the like.

For example, when the computer 1000 functions as the emotion calculation device 100, the CPU 1100 of the computer 1000 realizes the functions of the respective units by executing the program loaded on the RAM 1200. Further, the program related to the present disclosure is stored in the HDD 1400. Note that the CPU 1100 reads and executes the program data 1450 from the HDD 1400, but as another example, the CPU 1100 may acquire these programs from other devices via the external network 1550.

Note that the effects described in the present specification are merely examples and are not restrictive of the disclosure herein, and other effects not described herein also can be achieved.

Note that the present technology can also have the following configurations.
(1) An emotion calculation device comprising:
   an acquisition unit that acquires first content information regarding first content; and
   a calculation unit that calculates a matching frequency for the first content information for each of segments that classifies users based on emotion types of the users.
(2) The emotion calculation device according to (1), wherein
   the first content is any of a product, a text, a still image, a video, a sound, and a combination of the product, the text, the still image, the video, and the sound.
(3) The emotion calculation device according to (1) or (2), further comprising
   a display control unit that visualizes and displays matching information, capable of comparing the matching frequency between the emotion types in a first display area, on a display unit.
(4) The emotion calculation device according to (3), wherein
   the display control unit displays the emotion type of which the matching frequency is highest, as an optimal emotion type, in the first display area in close proximity to the matching information.
(5) The emotion calculation device according to (3) or (4), wherein when the emotion type and the optimal emotion type included in the matching information are selected, the display control unit displays detailed information of the selected emotion type or optimal emotion type.
(6) The emotion calculation device according to any one of (1) to (5), wherein
   the acquisition unit acquires sense-of-values information of the user.
(7) The emotion calculation device according to (6), further comprising
   an estimation unit that estimates a category of the emotion type of the user based on the sense-of-values information.
(8) The emotion calculation device according to any one of (1) to (7), wherein
   the acquisition unit acquires at least one second content information regarding a second content different from the first content generated based on the first content information, and
   the calculation unit calculates a matching frequency for the second content information, for each of a plurality of the emotion types.
(9) The emotion calculation device according to (8), wherein
   the display control unit displays the matching frequency of the first content information in the first display area, and displays the matching frequency of the second content information in a second display area close to the first display area.
(10) The emotion calculation device according to any one of (3) to (5), wherein
   when the first content is the text, the calculation unit calculates a delivery level indicating a level of understanding of the user with respect to the text, a touching level indicating a level of the text touching a mind of the user, and an expression tendency indicating a communication tendency by an expression method of the user with respect to the text.
(11) The emotion calculation device according to (10), wherein
   the display control unit visualizes and displays the delivery level, the touching level, and the expression tendency on the display unit.
(12) The emotion calculation device according to (10) or (11), further comprising
   a presentation unit that presents the text to the user belonging to the emotion type according to an emotion value of the text based on at least one of the delivery level, the touching level, and the expression tendency.
(13) The emotion calculation device according to (12), wherein
   the presentation unit presents optimal content that is optimal to the user based on sense-of-values information of the user.
(14) The emotion calculation device according to any one of (10) to (13), wherein
   when the delivery level displayed on the display unit is selected by the user, the display control unit scores and displays a number of appearances of each word or phrase contained in the text and a recognition level.
(15) The emotion calculation device according to any one of (10) to (13), wherein
   when the touching level displayed on the display unit is selected by the user, the display control unit scores and displays degree at which each of words related to a plurality of predetermined genres is included in the text and an appearance frequency of the word.
(16) The emotion calculation device according to (7), further comprising
   an update unit that detects a timing for updating the emotion type to which the user is classified, based on the sense-of-values information.
(17) The emotion calculation device according to any one of (1) to (16), wherein
   the calculation unit calculates a compatibility level between the emotion types.
(18) The emotion calculation device according to (6), wherein
   when the first content is the product,
   the acquisition unit acquires the sense-of-values information of the user for the product for each of the emotion types in a time-series manner, and
   the display control unit displays a temporal change of the sense-of-values information for the product for each of the emotion types.
(19) The emotion calculation device according to any one of (1) to (18), wherein
   the calculation unit calculates VOC content and evaluation for the first content in real time.
(20) The emotion calculation device according to any one of (1) to (19), wherein
   the calculation unit calculates recommendation information according to the emotion type.
(21) The emotion calculation device according to any one of (1) to (20), wherein
   the acquisition unit acquires review information for the content, and
   the calculation unit calculates a user image of the content based on the review information.
(22) An emotion calculation method comprising:
   acquiring first content information regarding first content; and
   calculating a matching frequency for the first content information for each of a plurality of emotion types that classifies users based on emotions of the users.
(23) A program configured to cause a computer to function as:
   an acquisition unit that acquires first content information regarding first content; and
   a calculation unit that calculates a matching frequency for the first content information for each of a plurality of emotion types that classifies users based on emotions of the users.
(24) A discovery device including:
   an acquisition unit that acquires content information; and
   a quality determination unit that uses a learned model to determine a popularity level of content that satisfies a predetermined condition for content information satisfying a predetermined condition out of pieces of the content information acquired by the acquisition unit.
(25) An analysis device including:
   an acquisition unit that acquires content information; and
   an identification unit that identifies a fan base of the content information using a learned model that outputs the fan base of the content information for a feature value of the content information acquired by the acquisition unit.
(26) The analysis device according to (25), further including
   a generation unit that generates a persona image of the fan base of the content information using a learned model that generates the persona image of the fan base of the content information for the feature value of the content information acquired by the acquisition unit.

### Reference Signs List

100 EMOTION CALCULATION DEVICE
110, 810, 3100 STORAGE UNIT
111 CUSTOMER DATABASE
112 CONSUMER DATABASE
113 EMOTION DATABASE
120, 820, 3200 CONTROL UNIT
121, 821, 3210 ACQUISITION UNIT
122 CALCULATION UNIT
123 ESTIMATION UNIT
124 PRESENTATION UNIT
125 UPDATE UNIT
126, 826, 3260 DISPLAY CONTROL UNIT
130, 830, 3300 COMMUNICATION UNIT
800 DISCOVERY DEVICE
811 FIRST LEARNED DATA STORAGE UNIT
812 SECOND LEARNED DATA STORAGE UNIT
813 THIRD LEARNED DATA STORAGE UNIT
822 EXTRACTION UNIT
823 TYPE DETERMINATION UNIT
824 QUALITY DETERMINATION UNIT
825 RECOMMENDATION UNIT
3000 ANALYSIS DEVICE
3110 PERSONA DATABASE
3120 ARTIST FEATURE VALUE DATABASE
3220 ANALYSIS UNIT
3230 IDENTIFICATION UNIT
3240 GENERATION UNIT
3250 PROVISION UNIT

## Claims

1. An emotion calculation device comprising:
an acquisition unit that acquires first content information regarding first content; and
a calculation unit that calculates a matching frequency for the first content information for each of segments that classifies users based on emotion types of the users.

2. The emotion calculation device according to claim 1, wherein
the first content is any of a product, a text, a still image, a video, a sound, and a combination of the product, the text, the still image, the video, and the sound.

3. The emotion calculation device according to claim 2, further comprising
a display control unit that visualizes and displays matching information, capable of comparing the matching frequency between the emotion types in a first display area, on a display unit.

4. The emotion calculation device according to claim 3, wherein
the display control unit displays the emotion type of which the matching frequency is highest, as an optimal emotion type, in the first display area in close proximity to the matching information.

5. The emotion calculation device according to claim 4, wherein
when the emotion type and the optimal emotion type included in the matching information are selected, the display control unit displays detailed information of the selected emotion type or optimal emotion type.

6. The emotion calculation device according to claim 3, wherein
the acquisition unit acquires sense-of-values information of the user.

7. The emotion calculation device according to claim 6, further comprising
an estimation unit that estimates a category of the emotion type of the user based on the sense-of-values information.

8. The emotion calculation device according to claim 3, wherein
the acquisition unit acquires at least one second content information regarding a second content different from the first content generated based on the first content information, and
the calculation unit calculates a matching frequency for the second content information, for each of a plurality of the emotion types.

9. The emotion calculation device according to claim 8, wherein
the display control unit displays the matching frequency of the first content information in the first display area, and displays the matching frequency of the second content information in a second display area close to the first display area.

10. The emotion calculation device according to claim 3, wherein
when the first content is the text, the calculation unit calculates a delivery level indicating a level of understanding of the user with respect to the text, a touching level indicating a level of the text touching a mind of the user, and an expression tendency indicating a communication tendency by an expression method of the user with respect to the text.

11. The emotion calculation device according to claim 10, wherein
the display control unit visualizes and displays the delivery level, the touching level, and the expression tendency on the display unit.

12. The emotion calculation device according to claim 11, further comprising
a presentation unit that presents the text to the user belonging to the emotion type according to an emotion value of the text based on at least one of the delivery level, the touching level, and the expression tendency.

13. The emotion calculation device according to claim 12, wherein
the presentation unit presents optimal content that is optimal to the user based on sense-of-values information of the user.

14. The emotion calculation device according to claim 11, wherein
when the delivery level displayed on the display unit is selected by the user, the display control unit scores and displays a number of appearances of each word or phrase contained in the text and a recognition level.

15. The emotion calculation device according to claim 11, wherein
when the touching level displayed on the display unit is selected by the user, the display control unit scores and displays degree at which each of words related to a plurality of predetermined genres is included in the text and an appearance frequency of the word.

16. The emotion calculation device according to claim 7, further comprising
an update unit that detects a timing for updating the emotion type to which the user is classified, based on the sense-of-values information.

17. The emotion calculation device according to claim 1, wherein
the calculation unit calculates a compatibility level between the emotion types.

18. The emotion calculation device according to claim 6, wherein when the first content is the product,
the acquisition unit acquires the sense-of-values information of the user for the product for each of the emotion types in a time-series manner, and
the display control unit displays a temporal change of the sense-of-values information for the product for each of the emotion types.

19. An emotion calculation method comprising:
acquiring first content information regarding first content; and
calculating a matching frequency for the first content information for each of a plurality of emotion types that classifies users based on emotions of the users.

20. A program configured to cause a computer to function as:
an acquisition unit that acquires first content information regarding first content; and
a calculation unit that calculates a matching frequency for the first content information for each of a plurality of emotion types that classifies users based on emotions of the users.
